(19) Europäisches Patentamt
European Patent Office
Office européen des brevets

(11) **EP 4 372 418 A1**

(12) **EUROPEAN PATENT APPLICATION**

(43) Date of publication:
**22.05.2024 Bulletin 2024/21**

(21) Application number: **23198888.2**

(22) Date of filing: **21.09.2023**

(51) International Patent Classification (IPC):
**G01S 17/58** (2006.01) **G01S 17/95** (2006.01)

(52) Cooperative Patent Classification (CPC):
**G01S 17/58; G01S 17/95**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.11.2022 US 202218057609**

(71) Applicant: **The Boeing Company**
**Arlington, VA 22202 (US)**

(72) Inventors:
• **HILLER, Nathan D.**
**Arlington, 22202 (US)**
• **DOWGWILLO, Robert M.**
**Arlington, 22202 (US)**
• **BAKHLE, Ishaan**
**Arlington, 22202 (US)**

(74) Representative: **St Clair Jones, Gregory Arthur Langley et al**
**Kilburn & Strode LLP**
**Lacon London**
**84 Theobalds Road**
**London WC1X 8NL (GB)**

(54) **OPTICAL DUAL WAVELENGTH LASER SPEED DETECTION SYSTEM**

(57) A method for detecting a speed of an aircraft. A first backscatter light generated in response to emitting a first laser beam having a first wavelength is received. A first beat frequency for a first interfered light generated by interfering the first backscatter light and a first reference light is measured. A second backscatter light generated in response to emitting a second laser beam having a second wavelength is received. A second beat frequency for a second interfered light generated by interfering the second backscatter light with a second reference light derived is measured. The speed of the aircraft is determined using the first beat frequency in response a power of the first backscatter light being greater than a threshold and using the second beat frequency is determined in response to the power of the first backscatter light not being greater than the threshold.

FIG. 1

EP 4 372 418 A1

## Description

## BACKGROUND INFORMATION

### 1. Field:

The present disclosure relates generally to sensors and in particular, to a method, apparatus, and system for detecting a speed of a moving vehicle.

### 2. Background:

A sensor such as a pitot tube is used to detect the speed of an aircraft. However, this type of sensor protrudes from the surface of aircraft to place the pitot tube into the airflow. This protrusion makes this type of sensor susceptible to environmental conditions. For example, unintended impacts, such as bird or insect strikes, can occur on a pitot tube. Other environmental issues include ice formation on the pitot tube.

Another type of sensor used for detecting speed is a light detection and ranging (LIDAR) sensor. With a LIDAR sensor, a laser beam is transmitted into the air and backscatter light generated in response to the laser beam is detected. The speed of the aircraft can be determined by comparing the frequency of the laser beam to the frequency in the backscatter. This shift in frequency can be used to calculate the speed of the aircraft.

## SUMMARY

An embodiment of the present disclosure provides a method for detecting a speed of an aircraft. A first backscatter light generated in response to emitting a first laser beam into an atmosphere from the aircraft is received. The first laser beam has a first wavelength. A first beat frequency for a first interfered light generated by interfering the first backscatter light and a first reference light derived from the first laser beam is measured. A second backscatter light generated in response to emitting a second laser beam into the atmosphere from the aircraft is received. The second laser beam has a second wavelength. A second beat frequency for a second interfered light generated by interfering the second backscatter light with a second reference light derived from the second laser beam is measured. The speed of the aircraft is determined using the first beat frequency in response a first power of the first backscatter light being greater than a threshold. The speed of the aircraft using the second beat frequency is determined in response to the first power of the first backscatter light not being greater than the threshold.

Another embodiment of the present disclosure provides a method for a speed of an aircraft. A first laser beam having a first wavelength is emitted. A second laser beam having a second wavelength is emitted. A first backscatter light generated in response to emitting the first laser beam into an atmosphere from the aircraft is received. A first beat frequency for a first interfered light generated from interfering the first backscatter light with a first reference light derived from the first laser beam is measured. A second backscatter light generated in response to emitting the second laser beam into the atmosphere from the aircraft is received. A second beat frequency for a second interfered light generated from interfering the second backscatter light with a second reference light derived from the second laser beam is measured. The speed of the aircraft is determined using the first beat frequency and the second beat frequency.

Yet another embodiment of the present disclosure provides an aircraft speed detection system for an aircraft. The aircraft speed detection system comprises an interference system, a detection system, and a speed analyzer. The interference system is configured to interfere a first backscatter light with a first reference light to form a first interfered light having a first beat frequency in response to receiving the first backscatter light. The first backscatter light is generated in response to emitting a first laser beam having a first wavelength and wherein the first reference light is derived from the first laser beam. The interference system is configured to interfere a second backscatter light with a second reference light to form a second interfered light having a second beat frequency in response to receiving the second backscatter light. The second backscatter light is generated in response to emitting a second laser beam having a second wavelength, the second reference light is derived from the second laser beam, and the first wavelength is shorter than the second wavelength. The detection system configured to measure the first beat frequency in the first interfered light and measure the second beat frequency in the second interfered light. The speed analyzer is configured to determine a speed for the aircraft using the first beat frequency in response to a first power of the first backscatter light being greater than a threshold. The speed analyzer is configured to determine the speed for the aircraft using the second beat frequency in response to the first power of the first backscatter light not being greater than the threshold.

In still another embodiment of the present disclosure, an aircraft speed detection system for an aircraft comprises a laser beam generator, a detection system, and a speed analyzer. The laser beam generator is configured to emit a first laser beam having a first wavelength and emit a second laser beam having a second wavelength. The first wavelength is shorter than the second wavelength. The detection system is configured to measure a first beat frequency for a first interfered light generated from interfering a first backscatter light detected in response to emitting the first laser beam and a first reference light derived from the first laser beam. The detection system is configured to measure a second beat frequency for a second interfered light generated from interfering a second backscatter light detected in response to emitting the second laser beam and a second reference light derived from the second laser beam. The speed analyzer is configured to determine a speed of the aircraft using the first beat frequency and the second beat frequency.

In yet another illustrative embodiment, an aircraft speed detection system for an aircraft comprises a first path, a second path, and a speed analyzer. The first path is configured to emit a first laser beam having a first wavelength, interfere a first backscatter light received in response to emitting the first laser beam with a first reference light derived from the first laser beam to form a first interfered light with a first beat frequency, and measure the first beat frequency for the first interfered light. The second path is configured to emit a second laser beam having a second wavelength, interfere a second backscatter light received in response to emitting the second laser beam with a second reference light derived from the second laser beam to form a second interfered light with a second beat frequency, and measure the second beat frequency for the first interfered light. The speed analyzer is in communication with the first path and the second path. the speed analyzer is configured to receive the first beat frequency from the first path, receive the second beat frequency from the second path and determine a speed of the aircraft using the first beat frequency and determine the speed of the aircraft using the second beat frequency in response to the first path being out of tolerance.

In another illustrative embodiment, an aircraft speed detection system for an aircraft comprises a tunable laser beam generator, an interference system, a detection system, and a speed analyzer. The tunable laser beam generator is configured to selectively emit the first laser beam and the second laser beam into an atmosphere from an aircraft. The interference system is configured to interfere a first backscatter light with a first reference light to form a first interfered light having a first beat frequency in response to receiving the first backscatter light. The first backscatter light is generated in response to emitting a first laser beam having a first wavelength and the first reference light is derived from the first laser beam. The interference system is configured to interfere a second backscatter light with a second reference light to form a second interfered light having a second beat frequency in response to receiving the second backscatter light. The second backscatter light is generated in response to emitting a second laser beam having a second wavelength, the second reference light is derived from the second laser beam, and first wavelength is shorter than the second wavelength. The detection system is configured to measure the first beat frequency in the first interfered light and measure the second beat frequency in the second interfered light. The speed analyzer is configured to determine a speed for the aircraft using the first beat frequency in response to a first power of the first backscatter light being greater than a threshold. The speed analyzer is configured to determine the speed for the aircraft using the second beat frequency in response to the first power of the first backscatter light not being greater than the threshold.

Another illustrative embodiment provides a method for detecting aerosols. A laser beam having a wavelength is emitted into an atmosphere. A backscatter light generated is received in response to emitting the laser beam into an atmosphere. A beat frequency is measured for an interfered light generated from interfering the backscatter light with a reference light derived from the laser beam. A set of characteristics is determined for the aerosols based on a power of the beat frequency.

Still another illustrative embodiment provides an aerosol detection system comprising a laser generation system, an interference system, a detector, and an aerosol analyzer. The laser generator system is configured to emit a laser beam into an atmosphere. The interference system is configured to interfere a backscatter light received in response to the laser beam with a reference light derived from the laser beam to form an interfered light having a beat frequency. The detector is configured to measure the beat frequency for the interfered light. The aerosol analyzer is configured to determine a set of characteristics for the aerosols based on a power of the beat frequency.

The features and functions can be achieved independently in various embodiments of the present disclosure or may be combined in yet other embodiments in which further details can be seen with reference to the following description and drawings.

## BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:

Figure 1 is an illustration of an aircraft is depicted in accordance with an illustrative embodiment;
Figure 2 is an illustration of a block diagram of a speed detection environment in accordance with an illustrative embodiment;
Figure 3 is an illustration of a block diagram of a laser generator in accordance with an illustrative embodiment;
Figure 4 is an illustration of a speed detection system in accordance with an illustrative embodiment;
Figure 5 is an illustration of light used to determine the speed of the vehicle in accordance with an illustrative embodiment;
Figure 6 is a pictorial illustration of airflow over the surface of an aircraft in accordance with an illustrative embodiment;
Figure 7 is an illustration of a graph of interference light in accordance with an illustrative embodiment;

**Figure 8** is an illustration of a graph of an interference light having a power that is greater than a threshold in accordance with an illustrative embodiment;

**Figure 9** is an illustration of a graph of an interference light having a power that is not greater than a threshold in accordance with an illustrative embodiment;

**Figure 10** is an illustration of a graph of interfered light from backscatter light generated from two laser beams having a power greater than a threshold in accordance with an illustrative embodiment;

**Figure 11** is an illustration of a speed detection system in accordance with an illustrative embodiment;

**Figure 12** is a flowchart of a process for detecting a speed of an aircraft in accordance with an illustrative embodiment;

**Figure 13** is an illustration of a flowchart of a process for indicating an error in accordance with an illustrative embodiment;

**Figure 14** is an illustration of a flowchart of a process for interfering backscatter light in accordance with an illustrative embodiment;

**Figure 15** is an illustration of a flowchart of a process for measuring power in accordance with an illustrative embodiment;

**Figure 16** is an illustration of a flowchart of process for measuring power in accordance with an illustrative embodiment;

**Figure 17** is an illustration of a flowchart of process for measuring power in accordance with an illustrative embodiment;

**Figure 18** is an illustration of a flowchart of a process for detecting a speed of an aircraft in accordance with an illustrative embodiment;

**Figure 19** is a flowchart of a process for determining the speed of an aircraft in accordance with an illustrative embodiment;

**Figure 20** is another flowchart of a process for determining the speed of an aircraft in accordance with an illustrative embodiment;

**Figure 21** is another flowchart of a process for determining the speed of an aircraft in accordance with an illustrative embodiment;

**Figure 22** is an illustration of a flowchart of a process for detecting aerosols in accordance with an illustrative embodiment;

**Figure 23** is an illustration of a flowchart of a process for determining a characteristic of aerosols in accordance with an illustrative embodiment;

**Figure 24** is an illustration of a flowchart of a process for determining a characteristic of aerosols in accordance with an illustrative embodiment;

**Figure 25** is an illustration of an aircraft manufacturing and service method in accordance with an illustrative embodiment; and

**Figure 26** is an illustration of a block diagram of an aircraft in which an illustrative embodiment may be implemented.

## DETAILED DESCRIPTION

The illustrative embodiments recognize and take into account one or more different considerations. For example, the illustrative embodiments recognize and take into account that under normal or optimal operating conditions, a laser beam such a light detection and ranging (LIDAR) beam is not distorted when emitted from the aircraft to detect speed of the aircraft. The laser beam scattering increases as the wavelength of the laser beam decreases. In other words, the amount of backscatter light occurring in response to emitting a laser beam increases as the wavelength of the laser beam decreases.

However, under non-ideal flight conditions such as those with turbulence, a laser beam such as a coherent LIDAR beam becomes distorted. This distortion reduces the accuracy or makes determining the speed of an aircraft impossible. The turbulence is turbulence in the airflow over the surface of aircraft. Turbulence can occur, for example, on a leading edge of a wing of an aircraft during different maneuvers or speeds. For example, when aircraft moves faster than the speed of sound, the amount of turbulence can make detecting the speed of aircraft difficult to impossible when the laser beam is emitted through the turbulent air and encounters eddy currents and bow shock waves flowing over surface of aircraft from the leading edge of the wing.

The illustrative embodiments recognize and take into account that a laser beam using a longer wavelength may work better under these flight conditions. By selecting the two wavelengths, one wavelength for normal operating conditions in which turbulence is absent, and another wavelength for abnormal operating conditions in which turbulence is present. The use of two wavelengths for different operating conditions can improve the performance in detecting the speed of the aircraft during various flight conditions for the aircraft.

The illustrative embodiments provide a method, apparatus, system, and computer program product for detecting speed of an aircraft. In one illustrative example, a method is provided for detecting a speed of an aircraft. A first backscatter light generated in response to emitting a first laser beam into the atmosphere from the aircraft is received. The laser beam has a first wavelength. A beat frequency is measured using a first backscatter light detected in response to first laser beam and a first reference light derived from the first laser beam in response a power of the first backscatter light being greater than a threshold. A second backscatter light in response to emitting a second laser beam into the atmosphere from the aircraft is received when the power of the first backscatter light not being greater than the threshold. The second laser beam has a second wavelength that is longer than the first wavelength. The beat frequency is measured using the second backscatter light and a second reference light derived from the second laser beam in response to the power of the first backscatter light not being greater than the threshold. The speed of the aircraft is determined using the beat frequency.

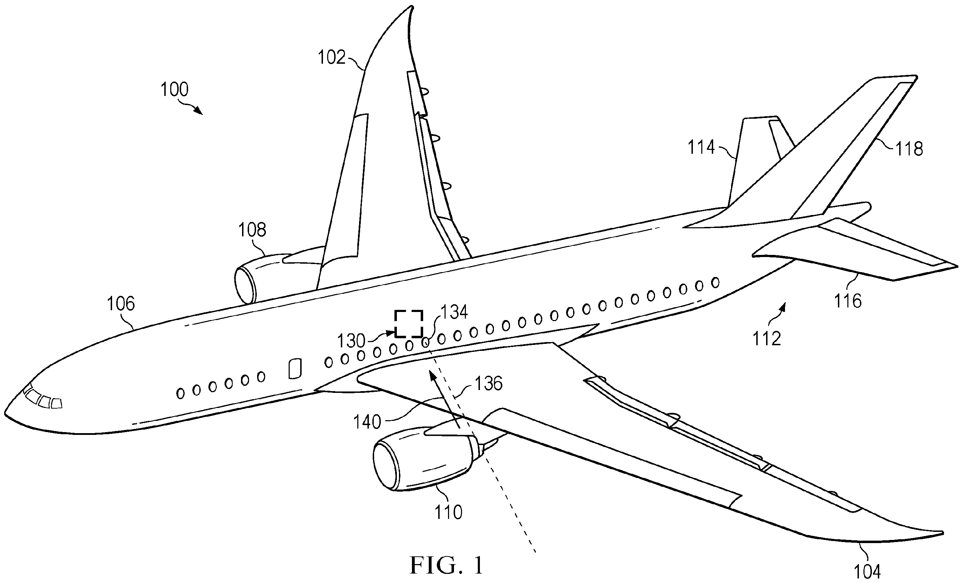

With reference now to the figures, and in particular, with reference to **Figure 1,** an illustration of an aircraft is depicted in accordance with an illustrative embodiment. In this illustrative example, commercial airplane **100** has wing **102** and wing **104** attached to body **106**. Commercial airplane **100** includes engine **108** attached to wing **102** and engine **110** attached to wing **104**.

Body **106** has tail section **112**. Horizontal stabilizer **114,** horizontal stabilizer **116,** and vertical stabilizer **118** are attached to tail section **112** of body **106**.

Commercial airplane **100** is an example of an aircraft in which speed detection system **130** can be implemented in accordance with an illustrative embodiment. In this illustrative example, speed detection system **130** can operate to emit laser beams from window **134** during flight or other movement of commercial airplane **100**. Speed detection system **130** can detect backscatter light **140** generated in response to emitting these laser beams.

In this depicted example, speed detection system **130** emits laser beam **136** from window **134** in different directions. Backscatter light **140** is generated in response to emitting laser beam **136**. In this example, backscatter light **140** is detected by speed detection system **130**. In this depicted example, backscatter light **140** is used to determine the speed of commercial airplane **100.**

In this example, speed detection system **130** interferes backscatter light **140** with a reference light. The reference light is derived from laser beam **136**. This interference of backscatter light **140** with the reference light results in an interference light having a beat frequency. The beat frequency for the interference light is used by speed detection system **130** to determine the speed of commercial airplane **100.**

In this illustrative example, different wavelengths can be used to emit laser beam **136.** For example, laser beam **136** can have a first wavelength that can be used during desired operating conditions in which turbulence is absent. Laser beam **136** can have a second wavelength that can be used during desired or ideal operating conditions and a second wavelength that is used under abnormal or non-ideal operating conditions. The first wavelength is shorter than the second wavelength and can be selected to be sufficiently short such that increased scattering of the laser beam occurs in the atmosphere. This selection of the first wavelength can increase backscatter light **140** received in response to emitting laser beam **136.**

However, turbulence in which turbulent airflow is present can disrupt laser beam **136** having the first wavelength. The first wavelength can result in increased disruption of the laser beam **136** when a non-ideal operating conditions exist such as the presence of turbulence. In this example, turbulence can be a condition in the speed of the air at a point that is continuously undergoing changes in magnitude and direction. Turbulence can be a flow of air in which the air undergoes irregular fluctuations or mixing as compared to laminar airflow in which the air moves in smooth paths or layers.

In response to the turbulence in the non-ideal operating condition, speed detection system **130** can change the wavelength of the laser beam **136** from first wavelength to second wavelength. The second wavelength is selected such that when laser beam **136** passes through turbulence, distortion of laser beam **136** is not so great such that backscatter light **140** received by speed detection system **130** cannot be processed to determine the speed of commercial airplane **100**. In other words, although some distortion of laser beam **136** can occur in response to turbulence, backscatter light **140** has a sufficient amount and quality that can be used by speed detection system **130** to detect the speed of commercial airplane **100.**

Illustration of speed detection system **130** for commercial airplane **100** is not meant to limit the manner in which other illustrative examples can be implemented. For example, one or more speed detection systems can be present in addition to speed detection system **130**. Further, in other illustrative examples, one or more wavelengths in addition to the first wavelength and the second wavelength for laser beam **136** can be used.

As used herein, "a number of" when used with reference to items, means one or more items. For example, "a number of different types of networks" is one or more different types of networks.

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

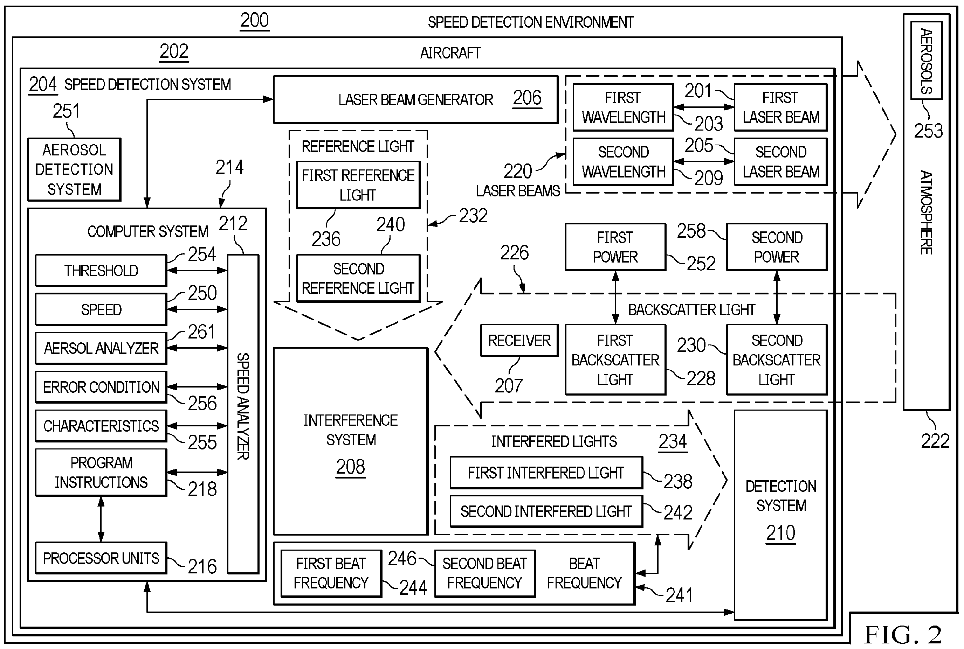

With reference now to **Figure 2,** an illustration of a block diagram of a speed detection environment is depicted in accordance with an illustrative embodiment. In this illustrative example, speed detection environment **200** is an environment in which the speed for aircraft **202** can be detected using speed detection system **204**. Commercial airplane **100** in **Figure 1** is an example of one implementation for aircraft **202**. Aircraft **202** can be selected from a group comprising one of a commercial aircraft, a commercial airplane, a tilt-rotor aircraft, a tilt wing aircraft, a vertical takeoff and landing aircraft, an electrical vertical takeoff and landing aircraft, a personal air aircraft, a miliary aircraft, a fighter jet, and other types of aircraft.

In this illustrative example, speed detection system **204** comprises a number of different components. As depicted, speed detection system **204** comprises laser beam generator **206**, receiver **207**, interference system **208**, detection system **210**, and speed analyzer **212**. These components are hardware components that also can include software used in operating the hardware components.

Laser beam generator **206** is used to generate laser beams **220** in speed detection system **204** and can be a LIDAR system that emits coherent light such as laser beams **220**. In this illustrative example, speed analyzer **212** can control laser beam generator **206** to generate laser beams **220**.

In this depicted example, first laser beam **201** has first wavelength **203** and second laser beam **205** has second wavelength **209**. Speed analyzer **212** can control laser beam generator **206** to selectively emit first laser beam **201** and second laser beam **205**. For example, laser beam generator **206** can be controlled to emit first laser beam **201**, second laser beam **205**, or both first laser beam **201** and second laser beam **205**.

As depicted, first laser beam **201** has first wavelength **203**. Second laser beam **205** has second wavelength **209**. In this illustrative example, first wavelength **203** is shorter than second wavelength **209**.

In this illustrative example, backscatter light **226** is generated in response to laser beams **220**. Backscatter light **226** occurs in response to laser beams 220 being scattered by particles or other objects in atmosphere **222**.

For example, first backscatter light **228** is generated in response to emitting first laser beam **201** into atmosphere **222**. Second backscatter light **230** is generated in response to emitting second laser beam **205** into atmosphere **222**.

In this illustrative example, speed analyzer **212** can also control the wavelengths for these laser beams emitted by laser beam generator **206**. For example, speed analyzer **212** can select values for first wavelength **203** and second wavelength **209**. In the illustrative example, first wavelength **203** for first laser beam **201** is selected to have a shorter wavelength than second wavelength **209** for second laser beam **205**.

In this illustrative example, receiver **207** receives backscatter light **226** generated in response to emitting laser beams **220** into atmosphere **222** from aircraft **202**. The reception of backscatter light **226** can also be referred to as detecting backscatter light **226**. In other words, the presence of backscatter light **226** can be detected by receiver **207** receiving backscatter light **226**.

For example, receiver **207** can receive first backscatter light **228** in backscatter light **226** generated in response to emitting first laser beam **201** into atmosphere **222** from aircraft **202**. Receiver **207** can also receive second backscatter light **230** in backscatter light **226** generated in response to emitting second laser beam **205** into atmosphere **222** from aircraft **202**.

In this illustrative example, interference system **208** interferes backscatter light **226** with reference light **232** to form interfered light **234**. For example, interference system **208** interferes first backscatter light **228** with first reference light **236** to generate first interfered light **238**. First reference light **236** is derived from first laser beam **201**.

Additionally, interference system **208** interferes second backscatter light **230** with second reference light **240** to generate second interfered light **242**. Second reference light **240** is derived from second laser beam **205**.

In this illustrative example, the derivation of a reference light from a laser beam can be performed in a number of different ways. For example, reference light **232** can be coherent light split from first laser beam **201** emitted by laser beam generator **206**. In another illustrative example, reference light **232** can be coherent light generated by the components that generate coherent light for first laser beam **201**. For example, first reference light **236** can be generated using the same oscillator, modulator, and fiber amplifier used to generate first laser beam **201**.

Detection system **210** measures beat frequency **241** for interfered light **234**. For example, detection system **210** can measure beat frequency **241** using first backscatter light **228** detected in response to first laser beam **201** and first reference light **236**. In this example, beat frequency **241** is measured for first interfered light **238** generated from interfering the backscatter light and reference light. This beat frequency can also be referred to as first beat frequency **244**.

Additionally, detection system **210** can measure beat frequency **241** using second backscatter light **230** detected in response to second laser beam **205** and second reference light **240**. In this example, beat frequency **241** is measured for second interfered light **242** generated from interfering the backscatter and reference light. This beat frequency can also be referred to as second beat frequency **246**.

In this illustrative example, detection system **210** is in communication with speed analyzer **212** in computer system **214**. Detection system **210** outputs beat frequency **241** to speed analyzer **212**. Speed analyzer **212** can determine speed **250** of aircraft **202** using beat frequency **241**. For example, detection system **210** can measure and output first beat frequency **244** and second beat frequency **246** and send these beat frequencies to speed analyzer **212** for use in determining speed **250** of aircraft **202**.

Speed analyzer **212** can be implemented in software, hardware, firmware or a combination thereof. When software is used, the operations performed by speed analyzer **212** can be implemented in program instructions configured to run on hardware, such as a processor unit. When firmware is used, the operations performed by speed analyzer **212** can be implemented in program instructions and data and stored in persistent memory to run on a processor unit. When hardware is employed, the hardware may include circuits that operate to perform the operations in speed analyzer **212.**

In the illustrative examples, the hardware may take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system **214** is a physical hardware system and includes one or more data processing systems. When more than one data processing system is present in computer system **214,** those data processing systems are in communication with each other using a communications medium. The communications medium may be a network. The data processing systems may be selected from at least one of a computer, a server computer, a tablet, or some other suitable data processing system.

As depicted, computer system **214** includes a number of processor units **216** that are capable of executing program instructions **218** implementing processes in the illustrative examples. In other words, program instructions **218** are computer readable program instructions.

As used herein, a processor unit in the number of processor units **216** is a hardware device and is comprised of hardware circuits such as those on an integrated circuit that respond and process instructions and program code that operate a computer. When the number of processor units **216** execute program instructions **218** for a process, the number of processor units **216** can be one or more processor units that are on the same computer or on different computers. In other words, the process can be distributed between processor units **216** on the same or different computers in a computer system **214** further, the number of processor units **216** can be of the same type or different type of processor units. For example, a number of processor units **216** can be selected from at least one of a single core processor, a dual-core processor, a multi-processor core, a general-purpose central processing unit (CPU), a graphics processing unit (GPU), a digital signal processor (DSP), or some other type of processor unit.

In one illustrative example, speed analyzer **212**
controls laser beam generator **206** to emit first laser beam **201** such that first backscatter light **228** is generated and received by receiver **207.** This backscatter light is used by interference system **208** to generate first interfered light **238** having first beat frequency **244.**

In this example, speed analyzer **212** can determine first power **252** for first backscatter light **228.** In response to first power **252** for first backscatter light **228** being greater than threshold **254,** speed analyzer **212** determines speed **250** using first beat frequency **244.**

In the depicted example, threshold **254** is a value for power in backscatter light that is considered sufficient to measure speed **250.** For example, threshold **254** can be selected such that the power of the backscatter light has a signal to noise ratio (SNR) that can be used to determine speed **250** of aircraft **202.**

This value for threshold **254** can be determined through experimental testing, simulations, and other techniques. The value used for threshold **254** can take into account factors such as desired accuracy, tolerances of components in speed detection system **204,** and other suitable factors. The value can be actual power measured, a signal-to-noise ratio for power, or some other suitable form.

In this example, in response to first power **252** of first backscatter light **228** not being greater than threshold **254,** speed analyzer **212** controls laser beam generator **206** to emit second laser beam **205** into atmosphere **222** such that receiver 207 receives second backscatter light **230.** This second backscatter light is used by interference system **208** to generate second interfered light **242** having second beat frequency **246.**

In this example, speed analyzer **212** determines speed **250** of aircraft **202** using second beat frequency **246** in response to first power **252** of first backscatter light **228** not being greater than threshold **254.** Further, in determining speed **250** of aircraft **202** using second beat frequency **246,** speed analyzer **212** can determine whether second power **258** of second backscatter light **230** is sufficient to determine speed **250** with a desired level of accuracy. In this example, speed analyzer **212** can indicate error condition **256** in response to second power **258** of second backscatter light **230** not being greater than threshold **254.**

In other illustrative examples, speed analyzer **212** can control laser beam generator **206** to emit both first laser beam **201** and second laser beam **205** at the same time or substantially the same time into atmosphere **222.** With this example, backscatter light **226** for both laser beams are received and used to generate first interfered light **238** having first beat frequency **244** and second interfered light **242** having second beat frequency **246.** In this illustrative example, speed analyzer **212** can receive both first beat frequency **244** and second beat frequency **246** from detection system **210.** With this example, speed analyzer **212** can select which beat frequency to use based on first power **252** for first backscatter light **228** and second power **258** for the second backscatter light **230.** In another illustrative example, both beat frequencies can be used to determine two speeds that are averaged to obtain speed **250** for aircraft **202.**

In this illustrative example, first power **252** for first backscatter light **228** and second power **258** for second backscatter light **230** can be measured in a number of different ways. For example, first power **252** for first backscatter light **228** can be measured indirectly. With this indirect measurement, a power meter or other device can be included in detection system **210** that indirectly measures first power **252** by measuring the power of first interfered light **238.** In this example, the power of first interfered light **238** can provide an indication of whether the amount of power needed to determine speed **250** with the desired level of accuracy is present. With this example, threshold **254** can be based on the power present in first interfered light **238** that was generated using first backscatter light **228.**

In another example, first power **252** for first backscatter light **228** can be directly measured. With this example, first power **252** for first backscatter light **228** is measured using a power meter or other device that is located in or at receiver **207.** In this example, first power **252** for first backscatter light **228** is measured prior to interfering first backscatter light **228** with first reference light **236.**

In addition to selecting threshold **254,** speed analyzer **212** can select at least one of first wavelength **203** or second wavelength **209.** In one illustrative example, first wavelength **203** is selected such that first power **252** of first backscatter light **228** is greater than threshold **254** in response to an absence of a turbulent airflow in a first path of the first laser beam emitted from the aircraft **202.** With this example, second wavelength **209** is selected such that power **248** for second backscatter light **230** is greater than threshold **254** in response to a presence of the turbulent airflow in a second path of the second laser beam emitted from the aircraft.

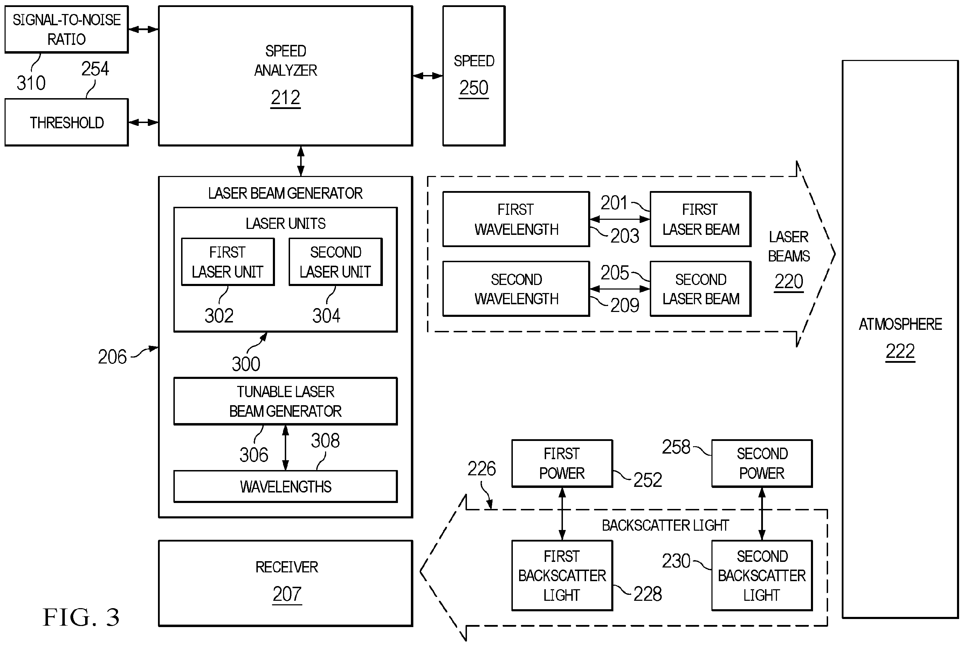

With reference next to **Figure 3,** an illustration of a block diagram of a laser generator is depicted in accordance with an illustrative embodiment. In the illustrative examples, the same reference numeral may be used in more than one figure. This reuse of a reference numeral in different figures represents the same element in the different figures.

In one illustrative example, laser beam generator **206** can comprise laser units **300.** Each laser beam unit in laser units **300** can generate a laser beam in laser beams **220** emitted by laser beam generator **206.** Speed analyzer **212** can control the operation of laser units **300** in emitting laser beams **220.**

In this illustrative example, each laser beam unit comprises components needed to generate and emit a laser beam and laser beams **220.** For example, components for a laser beam unit can comprise an oscillator, a modulator, and fiber amplifier. The oscillator generates coherent light. The modulator can modulate or adjust various properties for the coherent light including at least one of a frequency, a wavelength, an amplitude, intensity, a phase, a polarization, or other properties. The fiber amplifier can amplifier or boost the coherent light.

For example, laser units **300** can include first laser unit **302** and second laser unit **304.** In this example, first laser unit **302** generates first coherent light for first laser beam **201** having first wavelength **203.** Further, in this example, second laser unit **304** generates second coherent light for second laser beam **205** having second wavelength **209.** Additional laser units can be present for producing additional laser beams for emission from laser beam generator **206.**

In another illustrative example, laser beam generator **206** can be tunable laser beam generator **306.** With this example, tunable laser beam generator **306** can generate multiple laser beams in laser beams **220** with different properties such as different wavelengths. In one illustrative example, tunable laser beam generator **306** can generate both first laser beam **201** having first wavelength **203** and second laser beam **205** having second wavelength **209** for emission from tunable laser beam generator **306.**

In this example, speed analyzer **212** can control tunable laser beam generator **306** to change wavelengths to generate the different laser beams with the different wavelengths. In this illustrative example, speed analyzer **212** can control tunable laser beam generator **306** to scan wavelengths **308** to select first wavelength **203** and second wavelength **209.** In other words, first wavelength **203** and second wavelength **209** can be dynamic or changed by tunable laser beam generator **306** during operation of tunable laser beam generator **306** in laser beam generator **206** while aircraft **202** is in flight.

For example, speed analyzer **212** can control tunable laser beam generator **306** to adjust or select first wavelength **203** and second wavelength **209.** The selection of first wavelength **203** can be such that first power **252** of first backscatter light **228** is greater than threshold **254** in response to an absence of a turbulent airflow in a first path of first laser beam **201** emitted from aircraft **202.** The selection of second wavelength **209** can be such that second power **258** of second backscatter light **230** is greater than threshold **254** in response to a presence of the turbulent airflow in a second path of second laser beam **205** emitted from aircraft **202.**

In this illustrative example, speed analyzer **212** can determine signal-to-noise ratio **310** from first power **252** and second power **258.** With this example, threshold **254** can be a value for signal-to-noise ratio **310** such that the power of a backscatter light is sufficient for use in determining speed **250.**

In this illustrative example, the analysis can include using a fast Fourier transform to change power detected over time in a power versus time curve to a power versus frequency curve. With this example, if a frequency in the frequencies has a power that exceeds threshold **254,** then that frequency is the frequency for the beat frequency **241.** If none of the frequencies have a power that exceeds threshold **254,** a beat frequency cannot be detected in interfered light **234** in this example.

With this illustrative example, first wavelength **203** and second wavelength **209** can change during the flight of aircraft **202** in response to changing conditions in the environment around aircraft **202**. In other words, adjustments of first wavelength **203** and second wavelength **209** do not require performing changes in wavelength while aircraft is on the ground or during maintenance of aircraft **202**.

Further, the selection of first wavelength **203** and second wavelength **209** can be performed continuously in some illustrative examples. In other illustrative examples, this selection can be performed periodically after a period such as two seconds, one minute, three minutes, an hour, or some other period of time. Additionally, the selection of the wavelengths can be performed in response to a nonperiodic event such as the detection of turbulence or the speed of the aircraft reaching a supersonic speed.

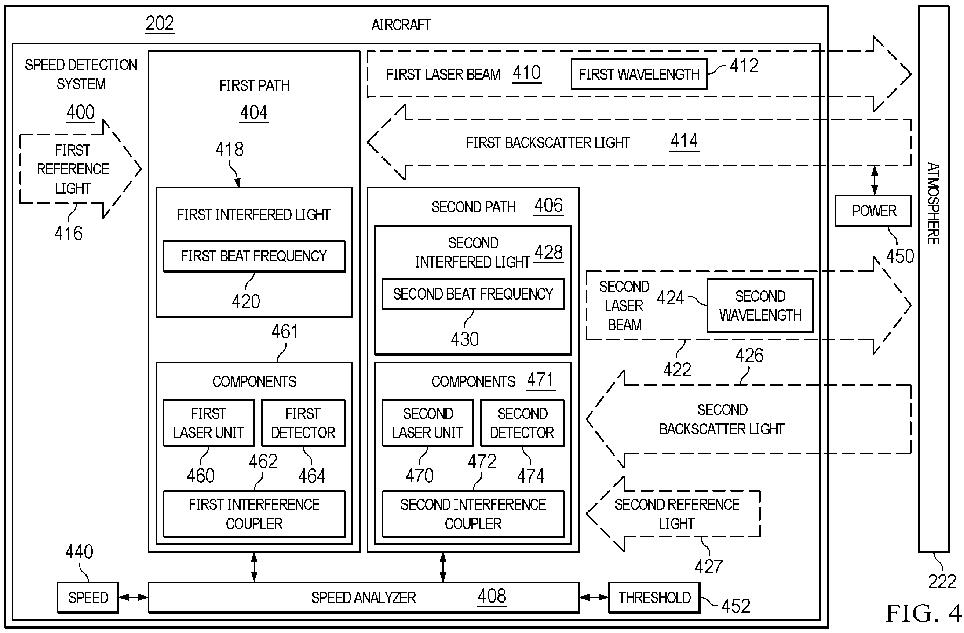

Turning next to **Figure 4,** an illustration of a speed detection system is depicted in accordance with an illustrative embodiment. In this illustrative example, speed detection system **400** can be implemented in aircraft **202** in speed detection environment **200** in **Figure 2**. In this depicted example, speed detection system **400** implements redundancy for detecting the speed of aircraft **202**. In this illustrative example, speed detection system **400** comprises a number of different components. These components are hardware components in the depicted examples. As depicted, speed detection system **400** comprises first path **404,** second path **406,** and speed analyzer **408**.

In this example, first path **404** emits first laser beam **410** having first wavelength **412**. First path **404** interferes first backscatter light **414** received in response to emitting first laser beam with first reference light **416** derived from first laser beam **410** to form first interfered light **418** with first beat frequency **420**. First path **404** measures first beat frequency **420** for first interfered light **418**.

In the depicted example, second path **406** emits second laser beam **422** having second wavelength **424**. Second path **406** interferes second backscatter light **426** received in response to emitting second laser beam **422** with second reference light **427** derived from second laser beam **422** to form second interfered light **428** with second beat frequency **430**. Second path **406** measures second beat frequency **430** for the second interfered light **428**.

In this example, speed analyzer **408** is in communication with first path **404** and second path **406**. Speed analyzer **408** is configured to receive first beat frequency **420** from first path **404** and receive second beat frequency **430** from second path **406**. Speed analyzer **408** is configured to determine speed **440** for aircraft **202** using first beat frequency **420** and determine speed of the aircraft using second beat frequency **430** in response to first path **404** being out of tolerance.

In addition to providing redundancy, speed detection system **400** can also be used to determine speed with a desired level of accuracy in different operating conditions. For example, first laser beam **410** with first wavelength **412** can be used during normal operation of aircraft **202** to determine speed **440** of aircraft **202** when turbulent airflow across the path of first laser beam **410** is absent. When turbulent airflow is present across the path of first laser beam **410**, second laser beam **422** having second wavelength **424** can be emitted by speed detection system **400** to determine speed **440** of aircraft **202** to receive second backscatter light **426**.

For example, speed analyzer **408** is configured to determine speed **440** of aircraft **202** using first beat frequency **420** in response to first backscatter light **414** having power **450** that is greater than threshold **452**. Speed analyzer **408** is configured to determine speed **440** of aircraft **202** using second beat frequency **430** in response to first backscatter light **414** having power **450** that is not greater than threshold **452**. Thus, speed detection system **400** can also be used to determine speed **440** of aircraft **202** for different types of conditions in addition to providing redundancy.

In this illustrative example, first path **404** can include a number of different types of components **461**. For example, first path **404** can include first laser unit **460,** first interference coupler **462,** and first detector **464**.

In this example, first laser unit **460** emits first laser beam **410**. First interference coupler **462** receives first backscatter light **414** generated in response to emitting first laser beam **410** and interferes first backscatter light **414** with first reference light **416** to form first interfered light **418**. First detector **464** is connected to first interference coupler **462** and first detector **464** measures first beat frequency **420** for first interfered light **418** output by first interference coupler **462**.

In this depicted example, second path **406** can include a number of different types of components **471**. These components can include, for example, second laser unit **470,** second interference coupler **472,** and second detector **474**.

As depicted, second laser unit **470** emits second laser beam **422**. Second interference coupler **472** receives second backscatter light **426** generated in response to emitting second laser beam **422** and interferes second backscatter light **426** with second reference light **427** to form second interfered light **428**. Second detector **474** is connected to second interference coupler **472**. Second detector **474** measures second beat frequency **430** for second interfered light **428** output by second interference coupler **472**.

These paths also include other components not shown. For example, the paths have connections between components such as optical fibers and wired connectors that connect the different components to each other.

The illustration of speed detection environment in the different components in **Figures 2-4** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, one or more laser beams having one or more additional wavelengths can be used in addition to first laser beam **201** having first wavelength **203** and second laser beam **205** having second wavelength **209.** The additional laser beams having additional wavelengths can be selected based on the operating conditions around aircraft **202.** For example, different wavelengths can be selected based on the amount of turbulence that is present.

In another example, speed detection system **204** can operate as aerosol detection system **251** to detect aerosols **253** in atmosphere **222.** Aerosols **253** can take a number of different forms. For example, aerosols **253** can be natural inorganic materials such as fine dust, sea salt, water droplets, and ice crystals. Aerosols **253** can also be natural organic materials such as smoke, pollen, spores, bacteria, and insect parts. In these examples, aerosols **253** can also be anthropogenic products of combustion such as smoke, ash, and dust. These particles can vary in size. For example, aerosols **253** can be from about 0.002 μm to about 100 μm.

In this example implementation, laser beams **220** emitted into atmosphere **222** and backscatter light **226** received in response to these laser beams can be used determine a set of characteristics **255** for aerosols **253.** The set of characteristics **255** can be determined by speed analyzer **212** using beat frequencies determined from interfering backscatter light with reference light. When determining the set of characteristics **225,** speed analyzer **212** can be referred to as an aerosol analyzer **261.** These characteristics can be, for example, at least one of an aerosol concentration, a particle size, or other characteristics. For example, threshold **254** can be a power level for a beat frequency that is selected to indicate the concentration of aerosol concentration. When the power of the beat frequency detected through measuring the power in interfered light **234** is equal to threshold **254,** the concentration level for aerosols **253** is concentration selected for threshold **254.** If the power of the interfered light at the beat frequency is greater than threshold **254,** the concentration for aerosols **253** is at least the concentration selected for threshold **254.** The concentration represented by threshold **254** typically can be identified through experimentation and simulations to identify the concentration level for aerosols **253** at the power level of selected threshold **254.** In other illustrative examples, one or more additional thresholds can be present in addition to threshold **254** that indicate other concentrations of aerosol levels. Thresholds and similar analysis can be performed by speed analyzer **212** to determine other characteristics in the set of characteristics **255.** As another example, polarization changes in the interfered light can indicate a presence of ice crystals or insect parts.

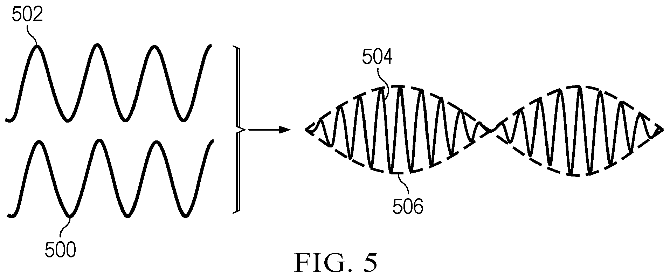

Turning next to **Figure 5,** an illustration of light used to determine the speed of the vehicle is depicted in accordance with an illustrative embodiment. In the illustrative example, a pair of backscatter lights is detected in response to emitting a pair of laser beams.

In this illustrative example, backscatter light **500** and reference light **502,** which are coherent light. For example, backscatter light **500** can be first backscatter light **228** and reference light **502** can be first reference light **236.** In another example, backscatter light **500** can be second backscatter light **230** and reference light **502** can be second reference light **240**

In this example, a difference is present between the frequency for backscatter light **500** and reference light **502.** This difference in frequency can be such that the interference of the backscatter light **500** and reference light **502** results in a beat frequency.

As depicted in this example, when backscatter light **500** and reference light **502** are interfered or combined with each other, interfered light **504** with beat frequency **506** is generated. In this example, beat frequency **506** can be measured by measuring the power of interfered light **504.** Beat frequency **506** can be used to determine the speed of the aircraft **202.**

However, when turbulent airflow is present, the quality of backscatter light **500** received in response to emitting a laser beam through the turbulent airflow can be sufficiently poor that interfering backscatter light **500** with reference light **502** does not contain interfered light **504** with beat frequency **506** that can be detected.

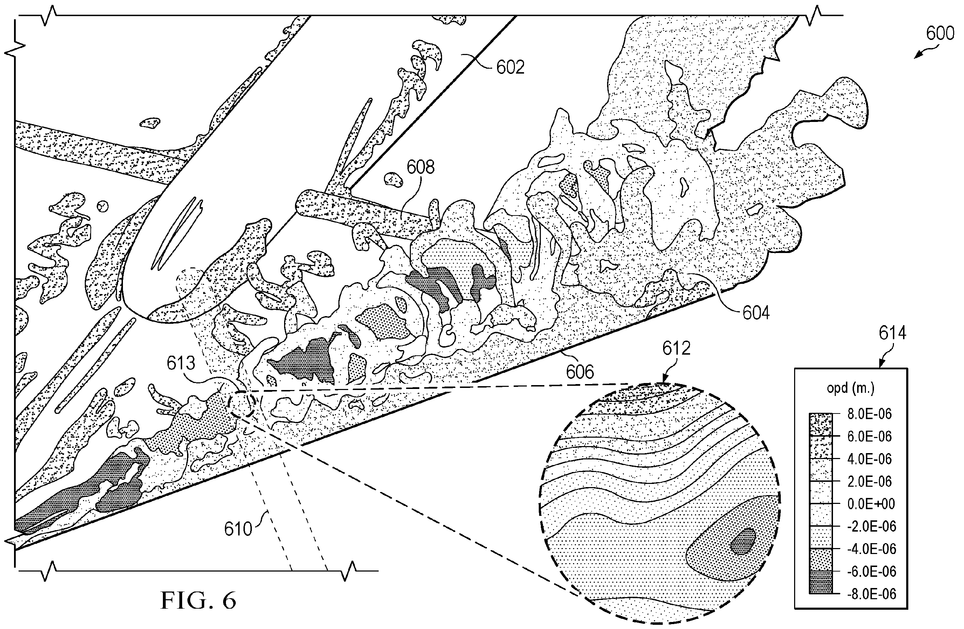

With reference now to **Figure 6,** a pictorial illustration of airflow over the surface of an aircraft is depicted in accordance with an illustrative embodiment. In this illustrative example, airflow **600** is shown over aircraft **602.** In this example, airflow **600** includes turbulent airflow **604** over leading edge **606** of wing **608.**

In this example, laser beam **610** is emitted from aircraft **602.** Turbulent airflow **604** is present across the path of laser beam **610.** Turbulent airflow **604** changes the optical path for laser beam **610.** The change in optical path occurs through changing densities within turbulent airflow **604.** As the density of the air increases in turbulent airflow **604,** the optical path increases in length. As the density decreases, the optical path decreases in length.

For example, section **612** is an enlarged view of section **613** where laser beam **610** propagates through turbulent airflow **604.** As can be seen in section **612,** the turbulent airflow has different densities identified by legend **614.**

When the change in the optical path is not even, backscatter light is not received in a manner that enables determining a beat frequency to detect the speed of aircraft **622.** As the frequency of laser beam **610** increases, increased dispersion of laser beam **610** results from turbulent airflow **604.** Decreasing the wavelength of laser beam **610** can reduce the effects of turbulent airflow **604.** In other words, the amount dispersion is reduced at lower wavelengths. Less scattering of laser beam **610** traveling through turbulent airflow occurs with lower wavelengths.

As a result, the first wavelength can be selected for a laser beam **610** that provides desired performance in determining the speed of aircraft **602** during normal conditions in which turbulent airflow **604** is absent or reduced across the path of laser beam **610** such that the speed of aircraft **602** can be determined from backscatter light received in response to laser beam **610.**

In this example, a second wavelength that is lower than the first wavelength can be selected for abnormal or undesired conditions in which turbulent airflow **604** is present across the path of laser beam **610.** As result, the wavelength of laser beam **610** can be changed based on differing conditions with respect to the amount of turbulent airflow **604** that is present. In some illustrative examples, multiple wavelengths can be selected based on the amount of turbulent airflow **604** that is present. In one illustrative example, the speed detection system can scan or change the frequency of laser beam **610** until the backscatter light received in response laser beam **610** provides sufficient power to determine the speed of aircraft **602.**

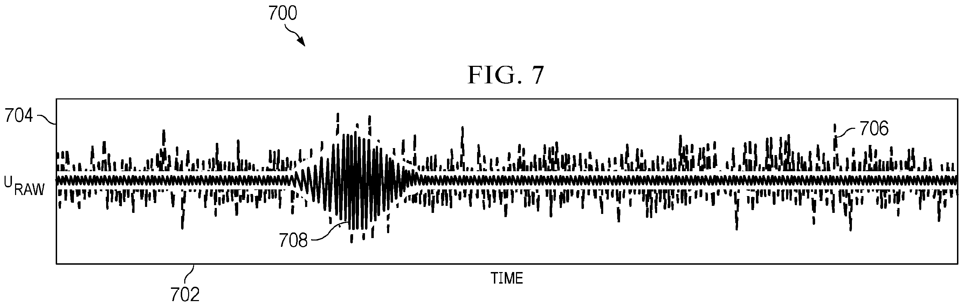

With reference next to **Figures 7-10,** illustrations of graphs of power for backscatter received in response to emitting laser beams are depicted in accordance with an illustrative embodiment.

With reference to **Figure 7,** an illustration of a graph of interference light is depicted in accordance with an illustrative embodiment. As depicted, graph **700** is a graph of power versus time with X axis **702** being time and Y axis **704** being power. In this example line **706** is the power measured by detector that includes the power for the interfered light and noise. In this example, the power of the interfered light is an indirect measurement of the power in the backscatter light received in response to a laser beam.

Line **708** represents the power for just the interfered light. However, the power for the interfered light in line **708** may not be distinguishable from the noise in line **706** in the measurements made by the detector.

The power versus time curve shows power generated by many different frequencies that are not distinguishable in the power versus time curve. With this situation, the power versus time curve can be transformed into a power versus frequency curve using a fast Fourier transform (FFT).

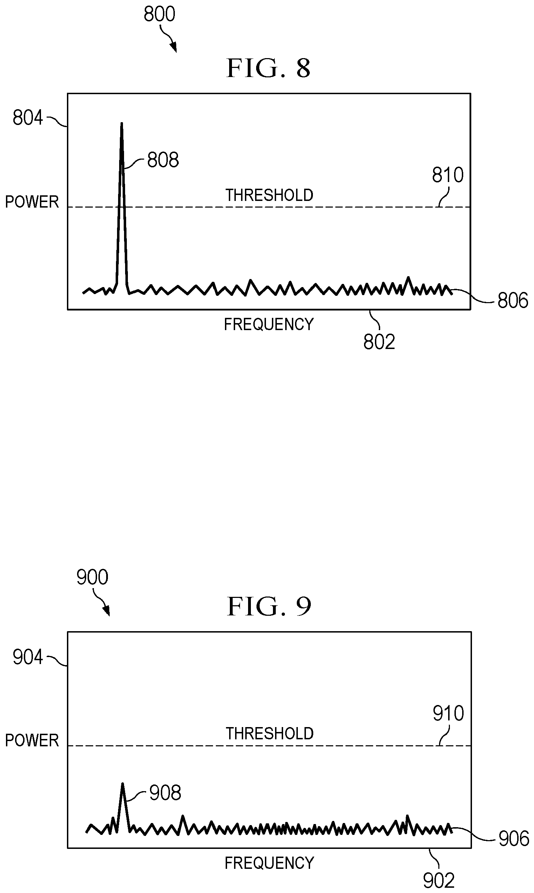

In **Figure 8,** an illustration of a graph of an interference light having a power that is greater than a threshold is depicted in accordance with an illustrative embodiment. As depicted, graph **800** is a graph of power versus frequency with X axis **802** being frequency and Y axis **804** being power.

In this example, line **806** represents power for an interfered light and noise. Line **806** can be generated by performing a Fast Fourier transform (FFT) on a power versus time curve measured for the interfered light, such as line **706** in graph **700** in **Figure 7.** As discussed in **Figure 7,** line **706** represents measurements made by detector that includes the power for the interfered light and can also include power for noise. The power versus time curve shows power generated by many different frequencies that are not distinguishable in the power versus time curve. By performing a Fast Fourier Transform, the power for different frequencies is seen in line **806.** This line can include the beat frequency and noise.

In this example, peak **808** is a candidate for a frequency that can be the beat frequency in the interfered light. Whether peak **808** is considered to be the frequency of the beat frequency can be determined by comparing the power of peak **808** to threshold **810.**

In this example, peak **808** is greater than threshold **810.** As a result, the frequency of peak **808** is considered the beat frequency for the interfered light. With peak **808** being greater than threshold **810,** the beat frequency can be used to determine the speed of the aircraft with a desired level of accuracy.

Turning now to **Figure 9,** an illustration of a graph of an interference light having a power that is not greater than a threshold is depicted in accordance with an illustrative embodiment. As depicted, graph **900** is a graph of power versus frequency with X axis **902** being frequency and Y axis **904** being power.

Line **906** represents power for different frequencies measured by a detector. In this example, peak **908** is peak with the highest power value in line **906.** Peak **908,** however, is not greater than threshold **910.** With this situation, the wavelength of the laser beam can be changed such that peak **908** has a higher power that is greater than threshold **910** such as peak **808** in **Figure 8.** In this example, threshold **810** and threshold **910** have the same value. In some other illustrative examples, different thresholds may be used for different wavelengths.

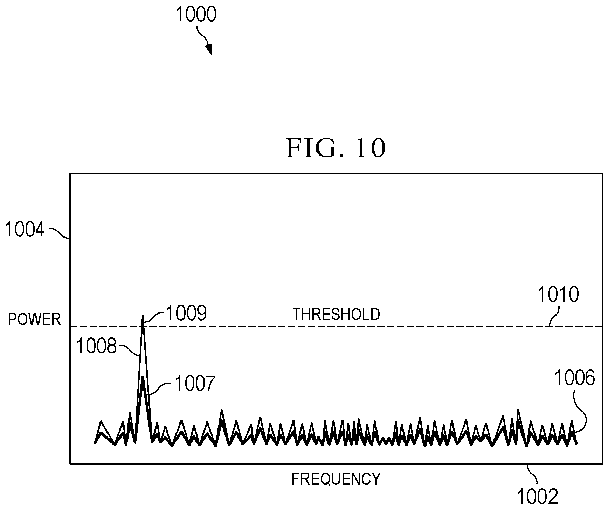

Turning next to **Figure 10,** an illustration of a graph of interfered light from backscatter light generated from two laser beams having a power greater than a threshold is depicted in accordance with an illustrative embodiment. As depicted, graph **1000** is a graph of power versus frequency with X axis **1002** being frequency and Y axis **1004** being power.

Line **1006** represents power for different frequencies measured by a detector for a backscatter light received in response to laser. In this example, peak **1008** is peak with the highest power value in line **1006.** Peak **1008,** however, is not greater than threshold **1010.**

In this illustrative example, line **1007** represents power for different frequencies measured by the detector for another backscatter light received in response to the laser beam having a different wavelength. In this example, line **1007** has peak **1009.** Peak **1009** has the same frequency as peak **1008.**

As depicted, line **1007** is added to line **1006**. With this combination of peak **1008** and peak **1009,** the power level is greater than threshold **1010**. In this example, the frequency for peak **1008** and peak **1009** have a power level that is sufficient to identify the beat frequency for peak **1008** and peak **1009** as the beat frequency.

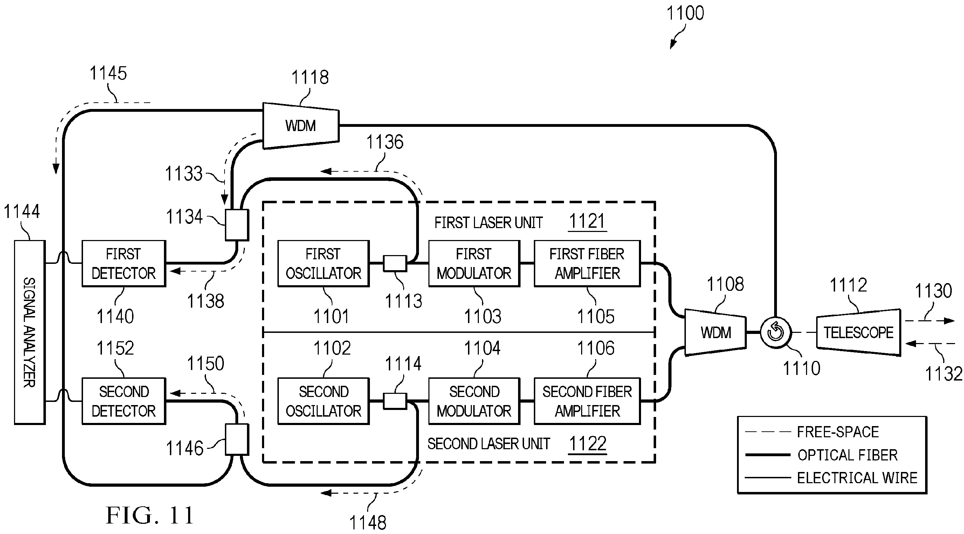

With reference next to **Figure 11,** an illustration of a speed detection system is depicted in accordance with an illustrative embodiment. In this illustrative example, speed detection system **1100** is an example of an implementation for speed detection system **204** in **Figure 2.**

As depicted, speed detection system **1100** comprises a number of different components. For example, some of the components in speed detection system **1100** are first oscillator **1101,** second oscillator **1102,** first modulator **1103,** second modulator **1104,** first fiber amplifier **1105,** second fiber amplifier **1106,** wavelength division multiplexer (WDM) **1108,** circulator **1110,** telescope **1112,** first splitter **1113,** and second splitter **1114.** These components are examples of components that can be used to implement laser beam generator **206** in **Figure 2.** In this example, first oscillator **1101,** first modulator **1103,** and first fiber amplifier **1105** are components in first laser unit **1121.** First laser unit **1121** can be an example of first laser unit **460** in **Figure 4.**

As depicted, second oscillator **1102,** second modulator **1104,** and second fiber amplifier **1106** are components in second laser unit **1122.** Second laser unit **1122** can be an example of second laser unit **470** in **Figure 4.**

In this example, the oscillators in these laser units generate coherent light that is used to emit laser beam **1130**. For example, first laser unit **1121** can generate coherent light for emission as laser beam **1130** having a first wavelength for emission. Second laser unit **1122** can generate coherent light for emission as laser beam **1130** having a second wavelength. Laser beam 1130 can also be referred to as an outgoing laser light or transmitted laser.

The modulators in the laser units operate to manipulate one or more properties of the coherent light generated by the oscillators. For example, the modulators can change or manipulate the coherent light generated by the oscillators to obtain desired property such as intensity, phase, polarization, or other property. The fiber amplifiers operate to amplify or boost the coherent light generated by oscillators and modulated by the modulators.

As depicted, the fiber amplifiers are connected to wavelength division multiplexer **1108**. Wavelength division multiplexer **1108** operates as a multiplexer to select which laser unit will have its coherent light emitted through telescope **1112** as laser beam **1130**.

The selected coherent light is sent from wavelength division multiplexer **1108** to circulator **1110**. Circulator **1110** is hardware optical circulator in the form of a port device such that light entering a port exits on the next port in circulator **1110**. In this example, the coherent light from wavelength division multiplexer **1108** is sent to telescope **1112** by circulator **1110**.

In response to the emission of laser beam **1130,** backscatter light **1132 is** received by telescope **1112**. In this illustrative example, backscatter light **1132** can include backscatter light generated in response to laser beam **1130** having a first wavelength or backscatter light generated in response to laser beam **1130** having the second wavelength.

In other illustrative examples, backscatter light **1132** can include backscatter light generated in response to laser beams being emitted from telescope **1112** having both the first wavelength and the second wavelength. In other words, backscatter light **1132** can comprise first backscatter light generated in response to laser beam **1130** being emitted using coherent light with a first wavelength from first laser unit **1121** and second backscatter light generated response to laser beam **1130** being emitted using coherent light with a second wavelength from second laser unit **1122**.

Backscatter light **1132** received by telescope **1112** is sent to wavelength division multiplexer (WDM) **1118**. Wavelength division multiplexer **1118** operates to demultiplex backscatter light **1132** based on the wavelength of light within backscatter light **1132**. For example, first backscatter light **1133** in backscatter light **1132** can be sent to first interference coupler **1134**. First interference coupler **1134** can be, for example, a 3DB coupler. In this example, first interference coupler **1134** interferes first backscatter light **1133** with first reference light **1136**.

As depicted, first reference light **1136** is derived from coherent light generated by first oscillator **1101**. In this example, first reference light **1136** is split from this coherent light using first splitter **1113** which is connected to first interference coupler **1134**.

First interfered light **1138** is sent from first interference coupler **1134** to first detector **1140**. First detector **1140** measures the beat frequency in first interfered light **1138**. The measurement of this beat frequency is sent to signal analyzer **1144**. Signal analyzer **1144** can determine the speed of the aircraft using this beat frequency.

In this depicted example, wavelength division multiplexer **1118** can demultiplex backscatter light **1132** to separate second backscatter light **1145** from other wavelengths of backscatter light. This second backscatter light is sent to second interference coupler **1146**. Second interference coupler **1146** can be, for example, a 3DB coupler.

As depicted, second interference coupler **1146** interferes second backscatter light **1145** with second reference light **1148** to form second interfered light **1150**. Second interference coupler **1146** sends second interfered light **1150** to second detector **1152**. In this example, second detector **1152** measures the beat frequency for second interfered light **1150** and sends the measured beat frequency to signal analyzer **1144**. Signal analyzer **1144** can determine the speed for the aircraft using this beat frequency.

In the different illustrative examples, signal analyzer **1144** can selectively use one or other or both the frequencies measured by first detector **1140** and second detector **1152**. In the illustrative example, in particular the beat frequency measured can be based on the conditions of the environment through which the aircraft is flying.

In another illustrative example, speed detection system **1100** can be an example of an implementation for speed detection system **400** in **Figure 4.** For example, first path **404** can be implemented using first laser unit **1121,** first interference coupler **1134,** and first detector **1140.** As another illustrative example, second path **406** can be implemented using second laser unit **1122,** second interference coupler **1146.** Further these paths can include optical fibers that connect these components to each other. The paths can also have some common components such as wavelength division multiplexer (WDM) **1108,** circulator **1110,** and wavelength division multiplexer (WDM) **1118.**

The illustration of speed detection system **1100** in **Figure 11** is provided as an example of one implementation for speed detection system **204** in **Figure 2.** This illustration is not meant to limit the manner in which speed analyzer **212** can be implemented in other illustrative examples. For example, wavelength division multiplexer (WDM) **1108** in **Figure 11** can be replaced with a beam splitter. In another example, first modulator **1103** and second modulator **1104** in **Figure 11** can be omitted when the laser beam system is a continuous wave LIDAR system. Additionally, optical fibers can be made solid or hollow core fibers. In other examples, the optical fibers can be omitted for a free-space LIDAR system.

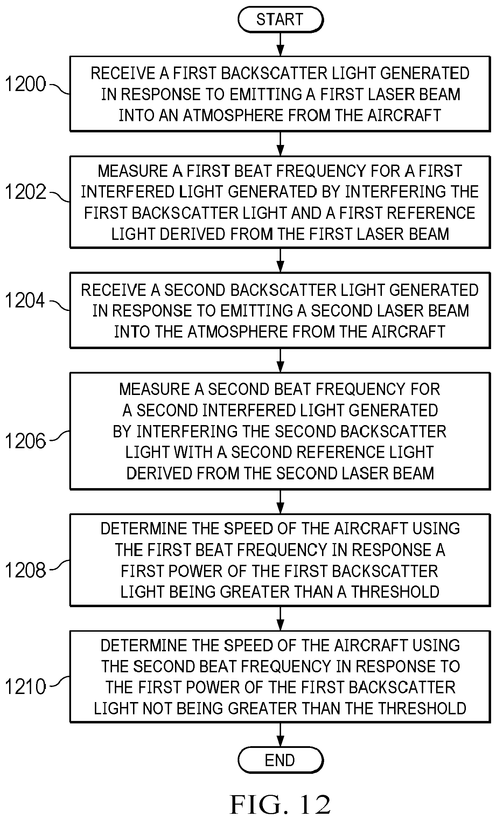

Turning next to **Figure 12,** a flowchart of a process for detecting a speed of an aircraft is depicted in accordance with an illustrative embodiment. The process in **Figure 12** can be implemented in hardware, software, or both. When implemented in software, the process can take the form of program instructions that are run by one of more processor units located in one or more hardware devices in one or more computer systems. For example, the process can be implemented in speed detection system **204** in **Figure 2.**

The process begins by receiving a first backscatter light generated in response to emitting a first laser beam into an atmosphere from the aircraft (operation **1200**). In operation **1200**, the first laser beam has a first wavelength. The process measures a first beat frequency for a first interfered light generated by interfering the first backscatter light and a first reference light derived from the first laser beam (operation **1202**).

The process receives a second backscatter light generated in response to emitting a second laser beam into the atmosphere from the aircraft (operation **1204**). In operation **1204,** the second laser beam has a second wavelength. The process measures a second beat frequency for a second interfered light generated by interfering the second backscatter light with a second reference light derived from the second laser beam (operation **1206**).

The process determines the speed of the aircraft using the first beat frequency in response a first power of the first backscatter light being greater than a threshold (operation **1208**). The process determines the speed of the aircraft using the second beat frequency in response to the first power of the first backscatter light not being greater than the threshold (operation **1210**). The process terminates thereafter.

In **Figure 12**, the first wavelength can be selected such that the first power is greater than the threshold in response to an absence of a turbulent airflow in a first path of the first laser beam emitted from the aircraft. The second wavelength can be selected such that the first power is greater than the threshold in response to a presence of the turbulent airflow in a second path of the second laser beam emitted from the aircraft.

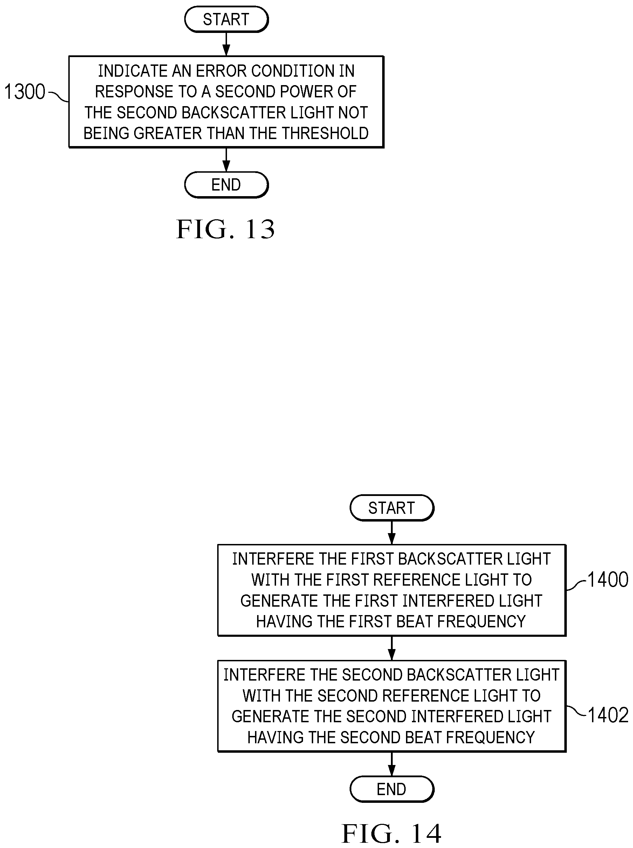

Turning next to **Figure 13,** an illustration of a flowchart of a process for indicating an error is depicted in accordance with an illustrative embodiment. The process illustrated in **Figure 13** is an example of an additional operation that can be performed with the operations in **Figure 12.**

The process indicates an error condition in response to a second power of the second backscatter light not being greater than the threshold (operation **1300**). The process terminates thereafter. This error condition indicates that neither backscatter light received in response to the laser beams using the two different wavelengths resulted in backscatter light having sufficient power to determine the speed of the aircraft with the desired level of accuracy.

With reference to **Figure 14,** an illustration of a flowchart of a process for interfering backscatter light is depicted in accordance with an illustrative embodiment. The process illustrated in **Figure 14** comprises additional operations that can be performed with the operations in **Figure 12.**

The process begins by interfering the first backscatter light with the first reference light to generate the first interfered light having the first beat frequency (operation **1400**). The process interferes the second backscatter light with the second reference light to generate the second interfered light having the second beat frequency (operation 1402). The process terminates thereafter.

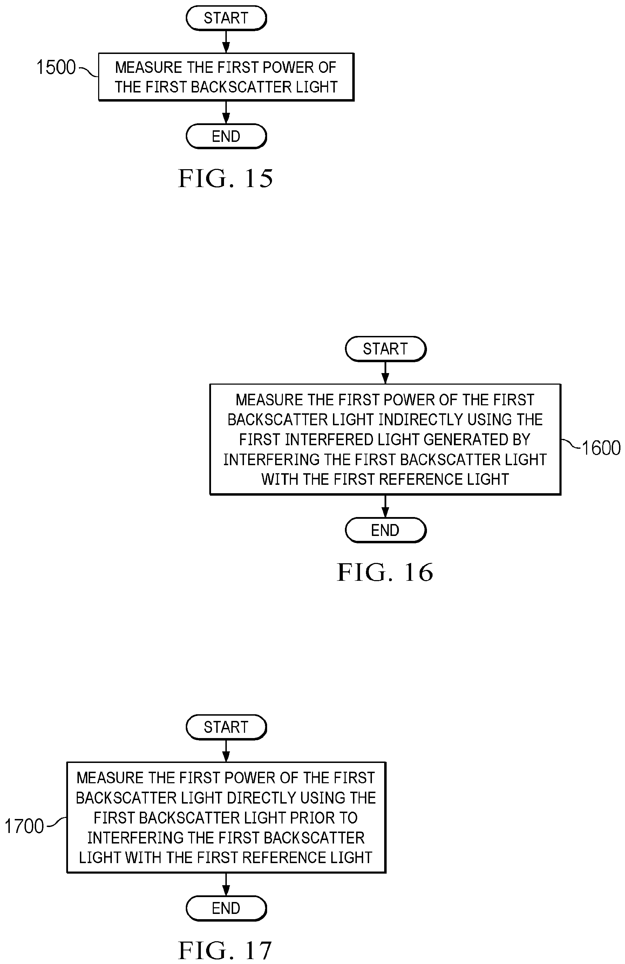

Turning to Figure 15, an illustration of a flowchart of a process for measuring power is depicted in accordance with an illustrative embodiment. The process illustrated in Figure 15 is an example of an additional operation that can be performed with the operations in **Figure 12.**

The process measures the first power of the first backscatter light (operation **1500**). The process terminates thereafter.

With reference to **Figure 16,** an illustration of a flowchart of process for measuring power is depicted in accordance with an illustrative embodiment. The process illustrated in this figure is an example of one implementation for operation **1500** in **Figure 15**.

The process measures the first power of the first backscatter light indirectly using the first interfered light generated by interfering the first backscatter light with the first reference light (operation **1600**). The process terminates thereafter.

In **Figure 17,** an illustration of a flowchart of process for measuring power is depicted in accordance with an illustrative embodiment. The process illustrated in this figure is an example of one implementation for operation **1500** in **Figure 15**.

The process measures the first power of the first backscatter light directly using the first backscatter light prior to interfering the first backscatter light with the first reference light (operation **1700**). The process terminates thereafter.

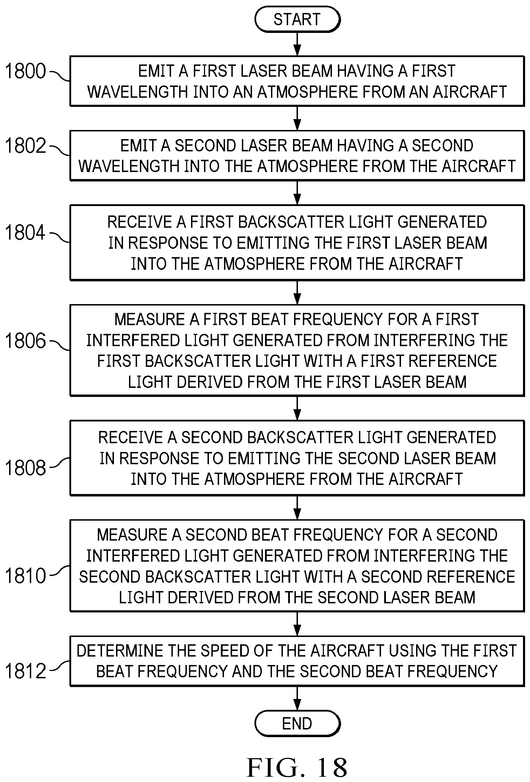

With reference to **Figure 18**, an illustration of a flowchart of a process for detecting a speed of an aircraft is depicted in accordance with an illustrative embodiment. The process in **Figure 18** can be implemented in hardware, software, or both. When implemented in software, the process can take the form of program instructions that are run by one of more processor units located in one or more hardware devices in one or more computer systems. For example, the process can be implemented in speed detection system **204** in **Figure 2.**

The process begins by emitting a first laser beam having a first wavelength into an atmosphere from an aircraft (operation **1800**). The process emits a second laser beam having a second wavelength into the atmosphere from the aircraft (operation **1802**).

The process receives a first backscatter light generated in response to emitting the first laser beam into the atmosphere from the aircraft (operation **1804**). The process measures a first beat frequency for a first interfered light generated from interfering the first backscatter light with a first reference light derived from the first laser beam (operation **1806**).

The process receives a second backscatter light generated in response to emitting the second laser beam into the atmosphere from the aircraft (operation **1808**). The process measures a second beat frequency for a second interfered light generated from interfering the second backscatter light with a second reference light derived from the second laser beam (operation **1810**).

The process determines the speed of the aircraft using the first beat frequency and the second beat frequency (operation **1812**). The process terminates thereafter.

In **Figure 18,** the first wavelength can be selected such that a first power of the first backscatter light is greater than a threshold in response to an absence of a turbulent airflow in a first path of the first laser beam emitted from the aircraft. The second wavelength can be selected such that a second power of the second backscatter light is greater than the threshold in response to a presence of the turbulent airflow in a second path of the second laser beam emitted from the aircraft.

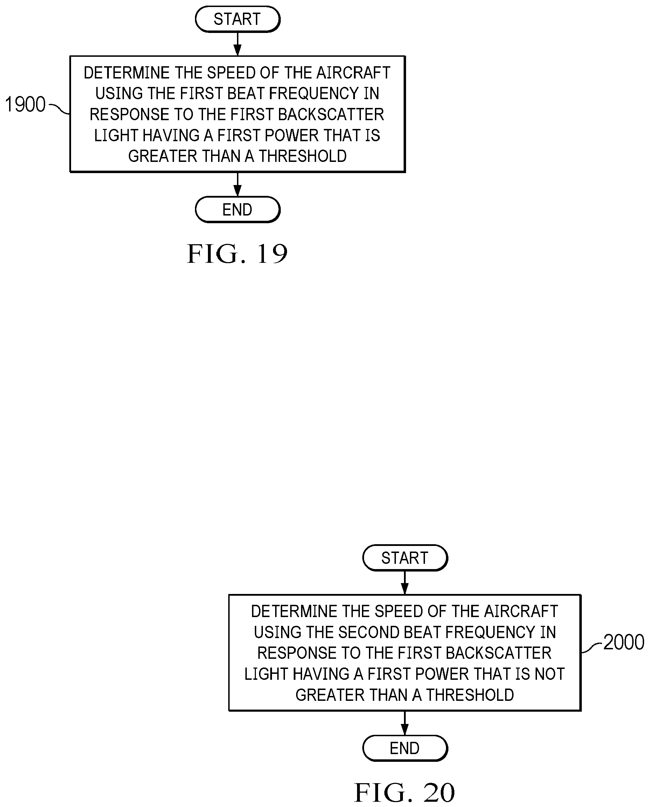

Turning next to **Figure 19,** a flowchart of a process for determining the speed of an aircraft is depicted in accordance with an illustrative embodiment. The process illustrated in **Figure 19** is an example of one implementation for operation **1812** in **Figure 18.**

The process determines the speed of the aircraft using the first beat frequency in response to the first backscatter light having a first power that is greater than a threshold (operation **1900**). The process terminates thereafter.

Turning to **Figure 20,** another flowchart of a process for determining the speed of an aircraft is depicted in accordance with an illustrative embodiment. The process illustrated in **Figure 20** is an example of one implementation for operation **1812** in **Figure 18.**

The process determines the speed of the aircraft using the second beat frequency in response to the first backscatter light having a first power that is not greater than a threshold (operation **2000**). The process terminates thereafter.

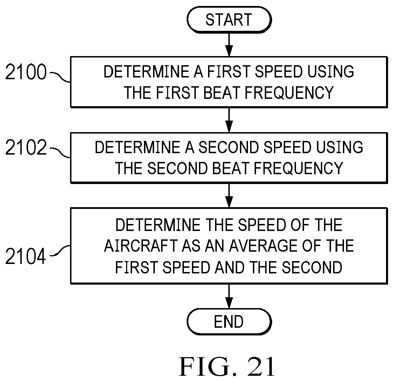

In **Figure 21,** another flowchart of a process for determining the speed of an aircraft is depicted in accordance with an illustrative embodiment. The process illustrated in **Figure 21** is an example of one implementation for operation **1812** in **Figure 18.**

The process begins by determining a first speed using the first beat frequency (operation **2100**). The process determines a second speed using the second beat frequency (operation **2102**).

The process determines the speed of the aircraft as an average of the first speed and the second speed (operation **2104**). The process terminates thereafter.

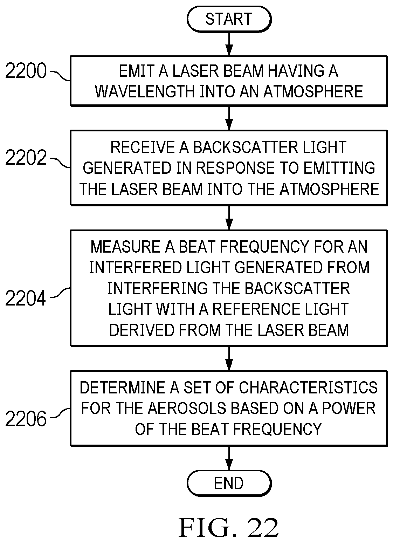

Turning next to **Figure 22**, an illustration of a flowchart of a process for detecting aerosols is depicted in accordance with an illustrative embodiment. The process in **Figure 12** can be implemented in hardware, software, or both. When implemented in software, the process can take the form of program instructions that is run by one of more processor units located in one or more hardware devices in one or more computer systems. For example, the process can be implemented in speed detection system **204** in **Figure 2.**

In this illustrative example, speed detection system **204** can also operate as an aerosol detection system to detect aerosols that may be present in the atmosphere around an aircraft. Further, speed detection system **204** can be implemented and other platforms other than aircraft to operate as an aerosol detection system. For example, when speed detection system **204** operates as an aerosol detection system, this detection system can be implemented in a platform such as from a mobile platform, a stationary platform, a land-based structure, an aquatic-based structure, and a space-based structure. More specifically, the platform can be a surface ship, a tank, a personnel carrier, a train, a spacecraft, a space station, a submarine, an automobile, a power plant, a bridge, a dam, a house, a manufacturing facility, a building, and other suitable platform for which aerosol detection is desired.

The process begins by emitting a laser beam having a wavelength into an atmosphere (operation **2200**). The process receives a backscatter light generated in response to emitting the laser beam into the atmosphere (operation **2202**).

The process measures a beat frequency for an interfered light generated from interfering the backscatter light with a reference light derived from the laser beam (operation **2204**). The process determines a set of characteristics for the aerosols based on a power of the beat frequency (operation **2206**). The process terminates thereafter. In operation **2206**, the set of characteristics is selected from at least one of an aerosol concentration, a particle size, or other suitable characteristic.

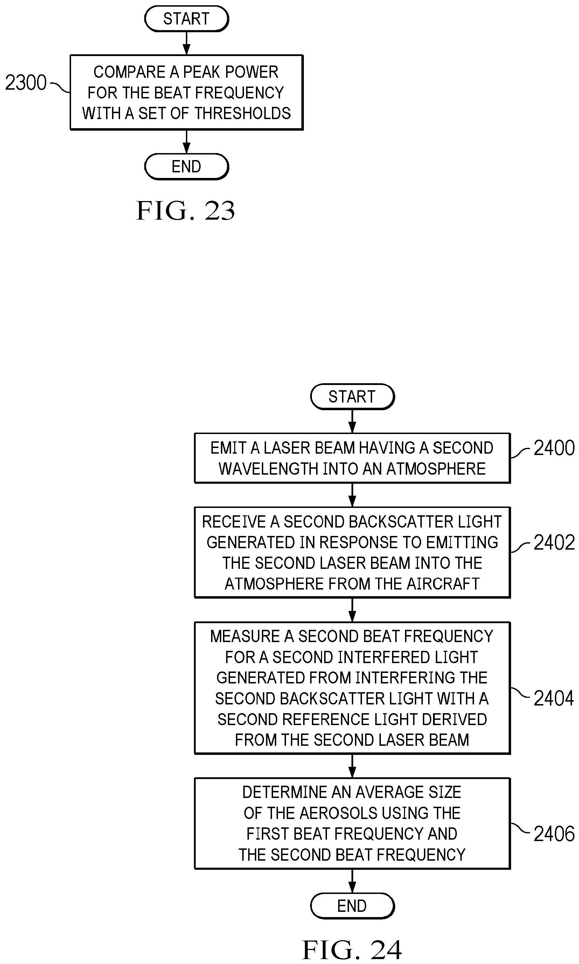

With reference next to **Figure 23,** an illustration of a flowchart of a process for determining a characteristic of aerosols is depicted in accordance with an illustrative embodiment. The process in **Figure 23** is an example of an implementation for operation **2206** and **Figure 22.**

The process compares a peak power for the beat frequency with a set of thresholds (operation **2300**). The process terminates thereafter. In operation **2300,** the set of thresholds can be one or more thresholds. In this example, each threshold in the set of thresholds can correspond to a concentration level for the aerosols.

Turning to **Figure 24,** an illustration of a flowchart of a process for determining a characteristic of aerosols is depicted in accordance with an illustrative embodiment. The process in **Figure 24** is an example of additional operations that can be used with the operations acted in **Figure 22** and an example implementation for operation example of an implementation for operation **2204** and **Figure 22.**

In this example, the laser beam is a first laser beam having a first frequency, the backscatter light is a first backscatter light, the beat frequency is a first beat frequency, and the power is a first power.

The process emits a second laser beam having a second wavelength into the atmosphere (operation **2400**). The process receives a second backscatter light generated in response to emitting the second laser beam into the atmosphere from the aircraft (operation **2402**).

The process measures a second beat frequency for a second interfered light generated from interfering the second backscatter light with a second reference light derived from the second laser beam (operation **2404**).

The process determines an average size of the aerosols using the first beat frequency and the second beat frequency (operation **2406**). The process terminates thereafter. In this example, operation **2406** is an example of an implementation for operation **2206** in **Figure 22.**

In determining the average size in operation **2406,** the backscatter power (P) is proportional to the density of aerosols ($\rho$) and a known function (f) of the wavelength ($\lambda$), the average diameter (d) of the aerosols:

$$P = \rho \bullet f(\lambda, d)$$

For two measurements on the same volume of atmosphere, the first measurement at a first wavelength $\lambda 1$ and the second measurement at a second wavelength $\lambda 2$, two backscatter powers are obtained:

$$P1 = \rho \bullet f(\lambda 1, d)$$

$$P2 = \rho \bullet f(\lambda 2, d)$$

The aerosol density and average diameter are the same in both measurements since the measurements are from the same volume of atmosphere. With two equations and two unknowns, "d" and "$\rho$" can be solved for in this example. Dividing these equations results in the following:

$$P1/P2 = f(\lambda 1, d)/f(\lambda 2, d)$$

Since the function "f" is nonlinear, this equation can be solved numerically to find "d". The value of "d" can be used to determine "$\rho$".

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

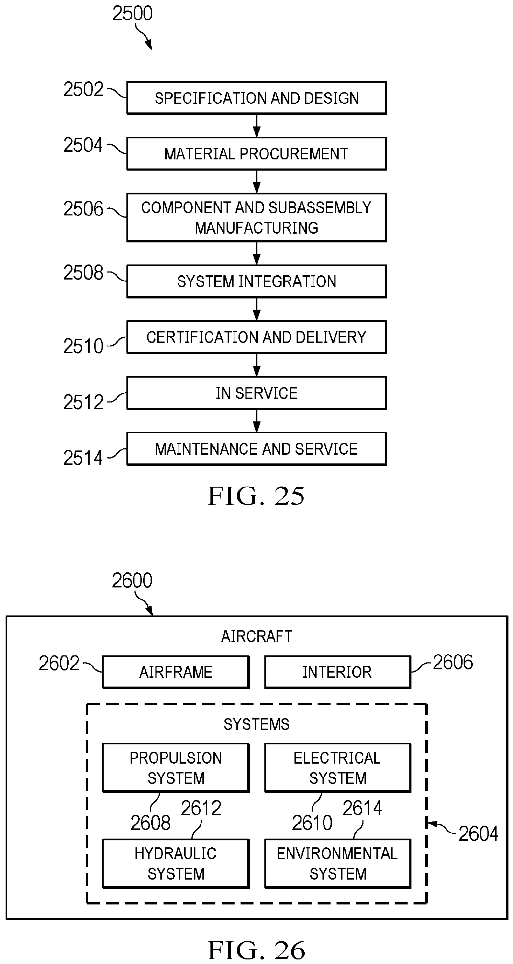

Illustrative embodiments of the disclosure may be described in the context of aircraft manufacturing and service method **2500** as shown in **Figure 25** and aircraft **2600** as shown in **Figure 26.** Turning first to **Figure 25,** an illustration of an aircraft manufacturing and service method is depicted in accordance with an illustrative embodiment. During pre-production, aircraft manufacturing and service method **2500** may include specification and design **2502** of aircraft **2600** in **Figure 26** and material procurement **2504.**

During production, component and subassembly manufacturing **2506** and system integration **2508** of aircraft **2600** in **Figure 26** takes place. Thereafter, aircraft **2600** in **Figure 26** can go through certification and delivery **2510** in order to be placed in service **2512.** While in service **2512** by a customer, aircraft **2600** in **Figure 26** is scheduled for routine maintenance and service **2514,** which may include modification, reconfiguration, refurbishment, and other maintenance or service.

Each of the processes of aircraft manufacturing and service method **2500** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 26,** an illustration of an aircraft is depicted in which an illustrative embodiment may be implemented. In this example, aircraft **2600** is produced by aircraft manufacturing and service method **2500** in **Figure 25** and may include airframe **2602** with plurality of systems **2604** and interior **2606.** Examples of systems **2604** include one or more of propulsion system **2608,** electrical system **2610,** hydraulic system **2612,** and environmental system **2614.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **2500** in **Figure 25.**

In one illustrative example, components or subassemblies produced in component and subassembly manufacturing 2506 in Figure 25 can be fabricated or manufactured in a manner similar to components or subassemblies produced while aircraft 2600 is in service 2512 in Figure 25. As yet another example, one or more apparatus embodiments, method embodiments, or a combination thereof can be utilized during production stages, such as component and subassembly manufacturing **2506** and system integration **2508** in **Figure 25.** One or more apparatus embodiments, method embodiments, or a combination thereof may be utilized while aircraft **2600** is in service **2512,** during maintenance and service **2514** in **Figure 25,** or both. The use of a number of the different illustrative embodiments may substantially expedite the assembly of aircraft **2600,** reduce the cost of aircraft **2600,** or both expedite the assembly of aircraft **2600** and reduce the cost of aircraft **2600.**

For example, a speed detection system in the illustrative examples can be implemented during system integration **2508.** This speed detection system can also be added to aircraft **2600** during maintenance and service **2514.** This addition can be made during modification, reconfiguration, refurbishment, and other maintenance or service.

Further, the use of the speed detection system can occur during in service **2512** in a manner that provides increased performance in detecting the speed of aircraft **2600** during flight. The accuracy of detecting speed can occur during various conditions for aircraft **2600.** For example, the frequency of the laser beam can be selected determine the speed of aircraft **2600** during both normal conditions and abnormal conditions. In abnormal conditions in which a laser beam is emitted through turbulent airflow, the frequency can be selected to reduce dispersion or scattering of the laser beam by the turbulent airflow in one or more illustrative examples.

Some features of the illustrative examples are described in the following clauses. These clauses are examples of features and are not intended to limit other illustrative examples.

Clause 1. A method for detecting a speed of an aircraft, the method comprising:

receiving a first backscatter light generated in response to emitting a first laser beam into an atmosphere from the aircraft, wherein the first laser beam has a first wavelength;
measuring a first beat frequency for a first interfered light generated by interfering the first backscatter light and a first reference light derived from the first laser beam ;
receiving a second backscatter light generated in response to emitting a second laser beam into the atmosphere from the aircraft, wherein the second laser beam has a second wavelength;
measuring a second beat frequency for a second interfered light generated by interfering the second backscatter light with a second reference light derived from the second laser beam;
determining the speed of the aircraft using the first beat frequency in response to a first power of the first backscatter light being greater than a threshold; and
determining the speed of the aircraft using the second beat frequency in response to the first power of the first backscatter light not being greater than the threshold.

Clause 2. The method according to clause 1 further comprising:
indicating an error condition in response to a second power of the second backscatter light not being greater than the threshold.

Clause 3. The method according to any of clauses 1 or 2 further comprising:

interfering the first backscatter light with the first reference light to generate the first interfered light having the first beat frequency; and
interfering the second backscatter light with the second reference light to generate the second interfered light having the second beat frequency.

Clause 4. The method according to any of clauses 1, 2, or 3, wherein the first wavelength is selected such that the first power is greater than the threshold in response to an absence of a turbulent airflow in a first path of the first laser beam emitted from the aircraft and wherein the second wavelength is selected such that the first power is greater than the threshold in response to a presence of the turbulent airflow in a second path of the second laser beam emitted from the aircraft.

Clause 5. The method according to any of clauses 1, 2, 3, or 4 further comprising:
measuring the first power of the first backscatter light.

Clause 6. The method according to clause 5, wherein measuring the first power of the first backscatter light comprises:
indirectly measuring the first power of the first backscatter light using the first interfered light generated by interfering the first backscatter light with the first reference light.

Clause 7. The method according to any of clauses 5 or 6, wherein measuring the first power of the first backscatter light comprises:
directly measuring the first power of the first backscatter light using the first backscatter light prior to interfering the first backscatter light with the first reference light.

Clause 8. The method according to any of clauses 1, 2, 3, 4, 5, 6, or 7, wherein the first laser beam having the first wavelength and the second laser beam having the second wavelength are generated by a tunable laser beam generator that generates coherent light for the first laser beam having the first wavelength and the second laser beam having the second wavelength.

Clause 9. The method according to any of clauses 1, 2, 3, 4, 5, 6, 7, or 8, wherein the first laser beam having the first wavelength and the second laser beam having the second wavelength are generated by a first laser unit in a laser beam generator that generates first coherent light for the first laser beam having the first wavelength and a second laser unit in the laser beam generator that generates second coherent light for the second laser beam having the second wavelength.

Clause 10. The method according to any of clauses 1, 2, 3, 4, 5, 6, 7, 8, or 9, wherein the aircraft is selected from one of a commercial aircraft, a commercial airplane, a tilt-rotor aircraft, a tilt wing aircraft, a vertical takeoff and landing aircraft, an electrical vertical takeoff and landing aircraft, a personal air aircraft, a miliary aircraft, and a fighter jet.

Clause 11. A method for detecting a speed of an aircraft, the method comprising:

emitting a first laser beam having a first wavelength into an atmosphere from the aircraft;
emitting a second laser beam having a second wavelength into the atmosphere from the aircraft;
receiving a first backscatter light generated in response to emitting the first laser beam into the atmosphere from the aircraft;
measuring a first beat frequency for a first interfered light generated from interfering the first backscatter light with a first reference light derived from the first laser beam;
receiving a second backscatter light generated in response to emitting the second laser beam into the atmosphere from the aircraft;
measuring a second beat frequency for a second interfered light generated from interfering the second backscatter light with a second reference light derived from the second laser beam; and
determining the speed of the aircraft using the first beat frequency and the second beat frequency.

Clause 12. The method according to clause 11, wherein the first wavelength is selected such that a first power of the first backscatter light is greater than a threshold in response to an absence of a turbulent airflow in a first path of the first laser beam emitted from the aircraft and wherein the second wavelength is selected such that a second power of the second backscatter light is greater than the threshold in response to a presence of the turbulent airflow in a second path of the second laser beam emitted from the aircraft.

Clause 13. The method according to any of clauses 11 or 12, wherein determining the speed of the aircraft using the first beat frequency and the second beat frequency comprises:
determining the speed of the aircraft using the first beat frequency in response to the first backscatter light having a first power that is greater than a threshold.

Clause 14. The method according to any of clauses 11, 12, or 13, wherein determining the speed of the aircraft using the first beat frequency and the second beat frequency comprises:
determining the speed of the aircraft using the second beat frequency in response to the first backscatter light having a first power that is not greater than a threshold.

Clause 15. The method according to any of clauses 11, 12, 13, or 14, wherein determining the speed of the aircraft using the first beat frequency and the second beat frequency comprises:

determining a first speed using the first beat frequency;
determining a second speed using the second beat frequency; and
determining the speed of the aircraft as an average of the first speed and the second speed.

Clause 16. An aircraft speed detection system for an aircraft, the aircraft speed detection system comprising:
an interference system configured to:

interfere a first backscatter light with a first reference light to form a first interfered light having a first beat frequency in response to receiving the first backscatter light, wherein the first backscatter light is generated in response to emitting a first laser beam having a first wavelength and wherein the first reference light is derived from the first laser beam; and
interfere a second backscatter light with a second reference light to form a second interfered light having a second beat frequency in response to receiving the second backscatter light, wherein the second backscatter light is generated in response to emitting a second laser beam having a second wavelength, the second reference light is derived from the second laser beam, and the first wavelength is shorter than the second wavelength; and
a detection system configured to:

measure the first beat frequency in the first interfered light;
measure the second beat frequency in the second interfered light; and
a speed analyzer configured to:

determine a speed for the aircraft using the first beat frequency in response to a first power of the first backscatter light being greater than a threshold; and
determine the speed for the aircraft using the second beat frequency in response to the first power of the first backscatter light not being greater than the threshold.

Clause 17. The aircraft speed detection system according to clause 16 further comprising:
a laser beam generator configured to selectively emit the first laser beam and the second laser beam into an atmosphere from the aircraft.

Clause 18. The aircraft speed detection system according to clause 17, wherein the speed analyzer is configured to control the laser beam generator to:

emit the first laser beam; and
emit the second laser beam in response to the first backscatter light having the first power that is less than a threshold.

Clause 19. The aircraft speed detection system according to clause 17 or clause 18 further comprising:
a receiver configured to receive the first backscatter light generated in response to emitting the first laser beam and the second backscatter light in response to emitting the second laser beam, wherein the receiver is in communication with the interference system and sends backscatter light received by the receiver to the interference system.

Clause 20. The aircraft speed detection system according to clause 19, wherein the threshold is a selected power for a backscatter light needed to determine the speed of the aircraft.

Clause 21. The aircraft speed detection system according to clause 19 or clause 20, wherein the first wavelength is selected such that the first power is greater than the threshold in response to an absence of a turbulent airflow in a first path of the first laser beam emitted from the aircraft and wherein the second wavelength is selected such that a second power for a second backscatter light is greater than the threshold in response to a presence of the turbulent airflow in a second path of the second laser beam emitted from the aircraft.

Clause 22. The aircraft speed detection system according to any of clauses 17, 18, 19, 20, or 21, wherein the detection system is configured to measure the first power of the first backscatter light.

Clause 23. The aircraft speed detection system according to clause 22, wherein in measuring the first power of the first backscatter light, the detection system is configured to:
indirectly measure the first power of the first backscatter light using the first interfered light generated by interfering the first backscatter light with the first reference light.

Clause 24. The aircraft speed detection system according any of clauses 22 or 23, wherein in measuring the first power of the first backscatter light, the detection system is configured to:
directly measure the first power of the first backscatter light using the first backscatter light prior to interfering the first backscatter light with the first reference light.

Clause 25. An aircraft speed detection system for an aircraft, the aircraft speed detection system comprising:

a laser beam generator configured to emit a first laser beam having a first wavelength and emit a second laser beam having a second wavelength, wherein the first wavelength is shorter than the second wavelength; and
a detection system configured to:

measure a first beat frequency for a first interfered light generated from interfering a first backscatter light detected in response to emitting the first laser beam and a first reference light derived from the first laser beam;
measure a second beat frequency for a second interfered light generated from interfering a second backscatter light detected in response to emitting the second laser beam and a second reference light derived from the second laser beam; and
a speed analyzer configured to determine a speed of the aircraft using the first beat frequency and the second beat frequency.

Clause 26. The aircraft speed detection system according to clause 25 further comprising:
an interference system configured to:

interfere the first backscatter light with the first reference light to form the first interfered light having the first beat frequency in response to receiving the first backscatter light; and
interfere the second backscatter light with the second reference light to form the second interfered light having the second beat frequency in response to receiving the second backscatter light.

Clause 27. The aircraft speed detection system according to any of clauses 25 or 26, wherein the first wavelength is selected such that the a first power of the first backscatter light is greater than a threshold in response to an absence of a turbulent airflow in a first path of the first laser beam emitted from the aircraft and wherein the second wavelength is selected such that a second power of the second backscatter light is greater than the threshold in response to a presence of the turbulent airflow in a second path of the second laser beam emitted from the aircraft.

Clause 28. The aircraft speed detection system according to any of clauses 25, 26, or 27, wherein in determining the speed of the aircraft using the first beat frequency and the second beat frequency, the speed analyzer is configured to:
determine the speed of the aircraft using the first beat frequency in response to the first backscatter light having a first power that is greater than a threshold.

Clause 29. The aircraft speed detection system according to any of clauses 25, 26, 27, or 28, wherein in determining the speed of the aircraft using the first beat frequency and the second beat frequency, the speed analyzer is configured to:
determine the speed of the aircraft using the second beat frequency in response to the first backscatter light having a first power that is not greater than a threshold.

Clause 30. The aircraft speed detection system according to any of clauses 25, 26, 27, 28, or 29, wherein in determining the speed of the aircraft using the first beat frequency and the second beat frequency, the speed analyzer is configured to:

determine a first speed using the first beat frequency;
determine a second speed using the second beat frequency; and

determine the speed of the aircraft as an average of the first speed and the second speed.

Clause 31. An aircraft speed detection system for an aircraft, the aircraft speed detection system comprising:
a first path is configured to:

emit a first laser beam having a first wavelength, interfere a first backscatter light received in response to emitting the first laser beam with a first reference light derived from the first laser beam to form a first interfered light with a first beat frequency, and measure the first beat frequency for the first interfered light; and
a second path is configured to:

emit a second laser beam having a second wavelength,
interfere a second backscatter light received in response to emitting the second laser beam with a second reference light derived from the second laser beam to form a second interfered light with a second beat frequency, and
measure the second beat frequency for the first interfered light; and
a speed analyzer in communication with the first path and the second path, wherein the speed analyzer is configured to:

receive the first beat frequency from the first path;
receive the second beat frequency from the second path; and
determine a speed of the aircraft using the first beat frequency and determine the speed of the aircraft using the second beat frequency in response to the first path being out of tolerance.

Clause 32. The aircraft speed detection system according to clause 31, wherein the first path comprises:

a first laser unit configured to emit the first laser beam;
a first interference coupler configured to receive the first backscatter light generated in response to emitting the first laser beam and interferes the first backscatter light with the first reference light to form the first interfered light; and
a first detector connected to the first interference coupler, wherein the first detector is configured to measure the first beat frequency for the first interfered light output by the first interference coupler;
wherein the second path comprises:

a second laser unit configured to emit the second laser beam;

a second interference couple configured to receive the second backscatter light generated in response to emitting the second laser beam and interferes the second backscatter light with the second reference light to form the second interfered light; and

a second detector connected to the second interference coupler, wherein the second detector is configured to measure the second beat frequency for the second interfered light output by the second interference coupler.

Clause 33. The aircraft speed detection system according to any of clauses 31 or 32, wherein the speed analyzer is configured to determine the speed of the aircraft using the first beat frequency in response to the first backscatter light having a power that is greater than a threshold.

Clause 34. The aircraft speed detection system according to any of clauses 31, 32, or 33, wherein the speed analyzer is configured to determine the speed of the aircraft using the second beat frequency in response to the first backscatter light having a power that is not greater than a threshold.

Clause 35. An aircraft speed detection system for an aircraft, the aircraft speed detection system comprising:

a tunable laser beam generator configured to:

selectively emit a first laser beam and a second laser beam into an atmosphere from the aircraft; and

an interference system configured to:

interfere a first backscatter light with a first reference light to form a first interfered light having a first beat frequency in response to receiving the first backscatter light, wherein the first backscatter light is generated in response to emitting the first laser beam having a first wavelength and wherein the first reference light is derived from the first laser beam; and

interfere a second backscatter light with a second reference light to form a second interfered light having a second beat frequency in response to receiving the second backscatter light, wherein the second backscatter light is generated in response to emitting the second laser beam having a second wavelength, the second reference light is derived from the second laser beam, and the first wavelength is shorter than the second wavelength; and

a detection system configured to:

measure the first beat frequency in the first interfered light; and

measure the second beat frequency in the second interfered light; and

a speed analyzer configured to:

determine a speed for the aircraft using the first beat frequency in response to a first power of the first backscatter light being greater than a threshold; and

determine the speed for the aircraft using the second beat frequency in response to the first power of the first backscatter light not being greater than the threshold.

Clause 36. A method for detecting aerosols, the method comprising:

emitting a laser beam into an atmosphere;
receiving a backscatter light generated in response to emitting the laser beam into the atmosphere;
measuring a beat frequency for an interfered light generated from interfering the backscatter light with a reference light derived from the laser beam; and
determining a set of characteristics for the aerosols based on a power of the beat frequency.

Clause 37. The method according to clause 36, wherein the set of characteristics at least one of an aerosol concentration, or a particle size.

Clause 38. The method according to any of clauses 36 or 37, wherein determining the set of characteristics for the aerosols based on a power of the beat frequency comprises:
comparing a peak power for the beat frequency with a set of thresholds, wherein each threshold in the set of thresholds corresponds to a concentration level for the aerosols.

Clause 39. The method according to any of clauses 36, 37, or 38, wherein the laser beam is a first laser beam having a first wavelength, the backscatter light is a first backscatter light, the beat frequency is a first beat frequency, and the power is a first power, and further comprising:

emitting a second laser beam having a second wavelength into the atmosphere;
receiving a second backscatter light generated in response to emitting the second laser beam into the atmosphere from an aircraft;
measuring a second beat frequency for a second interfered light generated from interfering the second backscatter light with a second reference light derived from the second laser beam; and
wherein determining the set of characteristics for the aerosols based on the power of the beat frequency comprises:
determining an average size of the aerosols using the first beat frequency and the second beat frequency.

Clause 40. An aerosol detection system comprising:

a laser generator system configured to emit a laser beam into an atmosphere;
an interference system configured to:

> interfere a backscatter light received in response to the laser beam with a reference light derived from the laser beam to form an interfered light having a beat frequency;
> a detector configured to:

>> measuring the beat frequency for the interfered light; and
>> an aerosol analyzer configured to:
>> determine a set of characteristics for the aerosols based on a power of the beat frequency.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method for detecting a speed (250, 440) of an aircraft (202, 602, 2600), the method comprising:

> receiving (1200) a first backscatter light (228, 414, 1133) generated in response to emitting a first laser beam (201, 410) into an atmosphere (222) from the aircraft (202, 602, 2600), wherein the first laser beam (201, 410) has a first wavelength (203, 412);
> measuring (1202) a first beat frequency (244, 420) for a first interfered light (238, 418, 1138) generated by interfering the first backscatter light (228, 414, 1133) and a first reference light (236, 416, 1136) derived from the first laser beam (201, 410) ;
receiving (1204) a second backscatter light (230, 426, 1145) generated in response to emitting a second laser beam (205, 422) into the atmosphere (222) from the aircraft (202, 602, 2600), wherein the second laser beam (205, 422) has a second wavelength (209, 424);
measuring (1206) a second beat frequency (246, 430) for a second interfered light (242, 428, 1150) generated by interfering the second backscatter light (230, 426, 1145) with a second reference light (240, 427, 1148) derived from the second laser beam (205, 422);
determining (1208) the speed (250, 440) of the aircraft (202, 602, 2600) using the first beat frequency (244, 420) in response to a first power (252) of the first backscatter light (228, 414, 1133) being greater than a threshold (254, 452, 810, 910, 1010); and
determining (1210) the speed (250, 440) of the aircraft (202, 602, 2600) using the second beat frequency (246, 430) in response to the first power (252) of the first backscatter light (228, 414, 1133) not being greater than the threshold (254, 452, 810, 910, 1010).

2. The method of claim 1 further comprising:
indicating (1300) an error condition (256) in response to a second power (258) of the second backscatter light (230, 426, 1145) not being greater than the threshold (254, 452, 810, 910, 1010).

3. The method of claim 1 or claim 2 further comprising:
interfering (1400) the first backscatter light (228, 414, 1133) with the first reference light (236, 416, 1136) to generate the first interfered light (238, 418, 1138) having the first beat frequency (244, 420); and interfering (1402) the second backscatter light (230, 426, 1145) with the second reference light (240, 427, 1148) to generate the second interfered light (242, 428, 1150) having the second beat frequency (246, 430).

4. The method of any of claims 1 to 3, wherein the first wavelength (203, 412) is selected such that the first power (252) is greater than the threshold (254, 452, 810, 910, 1010) in response to an absence of a turbulent airflow (604) in a first path (404) of the first laser beam (201, 410) emitted from the aircraft (202, 602, 2600) and wherein the second wavelength (209, 424) is selected such that the first power (252) is greater than the threshold (254, 452, 810, 910, 1010) in response to a presence of the turbulent airflow (604) in a second path (406) of the second laser beam (205, 422) emitted from the aircraft (202, 602, 2600).

5. The method of any of claims 1 to 4 further comprising:

measuring (1500) the first power (252) of the first backscatter light (228, 414, 1133).

6. The method of claim 5, wherein measuring (1500) the first power (252) of the first backscatter light (228, 414, 1133) comprises:
indirectly measuring (1600) the first power (252) of the first backscatter light (228, 414, 1133) using the first interfered light (238, 418, 1138) generated by interfering the first backscatter light (228, 414, 1133) with the first reference light (236, 416, 1136).

7. The method of claim 5 or claim 6, wherein measuring (1500) the first power (252) of the first backscatter light (228, 414, 1133) comprises:
directly measuring (1700) the first power (252) of the first backscatter light (228, 414, 1133) using the first backscatter light (228, 414, 1133) prior to interfering the first backscatter light (228, 414, 1133) with the first reference light (236, 416, 1136).

8. The method of any of claims 1 to 7, wherein the first laser beam (201, 410) having the first wavelength (203, 412) and the second laser beam (205, 422) having the second wavelength (209, 424) are generated by a tunable laser beam generator (306) that generates coherent light for the first laser beam (201, 410) having the first wavelength (203, 412) and the second laser beam (205, 422) having the second wavelength (209, 424).

9. The method of any of claims 1 to 8, wherein the first laser beam (201, 410) having the first wavelength (203, 412) and the second laser beam (205, 422) having the second wavelength (209, 424) are generated by a first laser unit (211, 302, 460, 1121) in a laser beam generator (206) that generates first coherent light for the first laser beam (201, 410) having the first wavelength (203, 412) and a second laser unit (213, 304, 470, 1122) in the laser beam generator (206) that generates second coherent light for the second laser beam (205, 422) having the second wavelength (209, 424).

10. The method of any of claims 1 to 9, wherein the aircraft (202, 602, 2600) is selected from one of a commercial aircraft, a commercial airplane, a tilt-rotor aircraft, a tilt wing aircraft, a vertical takeoff and landing aircraft, an electrical vertical takeoff and landing aircraft, a personal air aircraft, a miliary aircraft, and a fighter jet.

11. An aircraft speed detection system (130, 204, 400, 1100) for an aircraft (202, 602, 2600), the aircraft speed detection system (130, 204, 400, 1100) comprising:
an interference system (208) configured to:

interfere a first backscatter light (228, 414, 1133) with a first reference light (236, 416, 1136) to form a first interfered light (238, 418, 1138) having a first beat frequency (244, 420) in response to receiving the first backscatter light (228, 414, 1133), wherein the first backscatter light (228, 414, 1133) is generated in response to emitting a first laser beam (201, 410) having a first wavelength (203, 412) and wherein the first reference light (236, 416, 1136) is derived from the first laser beam (201, 410); and
interfere a second backscatter light (230, 426, 1145) with a second reference light (240, 427, 1148) to form a second interfered light (242, 428, 1150) having a second beat frequency (246, 430) in response to receiving the second backscatter light (230, 426, 1145), wherein the second backscatter light (230, 426, 1145) is generated in response to emitting a second laser beam (205, 422) having a second wavelength (209, 424), the second reference light (240, 427, 1148) is derived from the second laser beam (205, 422), and the first wavelength (203, 412) is shorter than the second wavelength (209, 424); and
a detection system (210) configured to:

measure the first beat frequency (244, 420) in the first interfered light (238, 418, 1138);
measure the second beat frequency (246, 430) in the second interfered light (242, 428, 1150); and
a speed analyzer (212, 408) configured to:

determine a speed (250, 440) for the aircraft (202, 602, 2600) using the first beat frequency (244, 420) in response to a first power (252) of the first backscatter light (228, 414, 1133) being greater than a threshold (254, 452, 810, 910, 1010); and
determine the speed (250, 440) for the aircraft (202, 602, 2600) using the second beat frequency (246, 430) in response to the first power (252) of the first backscatter light (228, 414, 1133) not being greater than the threshold (254, 452, 810, 910, 1010).

12. The aircraft speed detection system (130, 204, 400, 1100) of claim 11 further comprising:

a laser beam generator (206) configured to selectively emit the first laser beam (201, 410) and the second laser beam (205, 422) into an atmosphere (222) from the aircraft (202, 602, 2600), optionally,
wherein the speed analyzer (212, 408) is configured to control the laser beam generator (206) to:

emit the first laser beam (201, 410); and emit the second laser beam (205, 422) in response to the first backscatter light (228, 414, 1133) having the first power (252) that is less than a threshold (254, 452, 810, 910, 1010).

13. The aircraft speed detection system (130, 204, 400, 1100) of claim 12 further comprising:

a receiver (207) configured to receive the first backscatter light (228, 414, 1133) generated in response to emitting the first laser beam (201, 410) and the second backscatter light (230, 426, 1145) in response to emitting the second laser beam (205, 422), wherein the receiver (207) is in communication with the interference system (208) and sends backscatter light received by the receiver (207) to the interference system (208), optionally,
wherein the threshold (254, 452, 810, 910, 1010) is a selected power for a backscatter light needed to determine the speed (250, 440) of the aircraft (202, 602, 2600), and/or,
wherein the first wavelength (203, 412) is selected such that the first power (252) is greater than the threshold (254, 452, 810, 910, 1010) in response to an absence of a turbulent airflow (604) in a first path (404) of the first laser beam (201, 410) emitted from the aircraft (202, 602, 2600) and wherein the second wavelength (209, 424) is selected such that a second power (258) for a second backscatter light (230, 426, 1145) is greater than the threshold (254, 452, 810, 910, 1010) in response to a presence of the turbulent airflow (604) in a second path (406) of the second laser beam (205, 422) emitted from the aircraft (202, 602, 2600).

14. The aircraft speed detection system (130, 204, 400, 1100) of any of claims 11 to 13, wherein the detection system (210) is configured to measure the first power (252) of the first backscatter light (228, 414, 1133) and, optionally,
wherein in measuring the first power (252) of the first backscatter light (228, 414, 1133), the detection system (210) is configured to:
indirectly measure the first power (252) of the first backscatter light (228, 414, 1133) using the first interfered light (238, 418, 1138) generated by interfering the first backscatter light (228, 414, 1133) with the first reference light (236, 416, 1136).

15. The aircraft speed detection system (130, 204, 400, 1100) of claim 14, wherein in measuring the first power (252) of the first backscatter light (228, 414, 1133), the detection system (210) is configured to:
directly measure the first power (252) of the first backscatter light (228, 414, 1133) using the first backscatter light (228, 414, 1133) prior to interfering the first backscatter light (228, 414, 1133) with the first reference light (236, 416, 1136).

FIG. 1

FIG. 2

FIG. 3

FIG. 4

SPEED DETECTION SYSTEM 400

AIRCRAFT 202

ATMOSPHERE 222

POWER 450

FIRST LASER BEAM 410
FIRST WAVELENGTH 412

FIRST BACKSCATTER LIGHT 414

FIRST REFERENCE LIGHT 416

FIRST PATH 404

FIRST INTERFERED LIGHT 418
FIRST BEAT FREQUENCY 420

COMPONENTS 461
FIRST LASER UNIT 460
FIRST DETECTOR 462 464
FIRST INTERFERENCE COUPLER

SECOND LASER BEAM 422
SECOND WAVELENGTH 424 426

SECOND BACKSCATTER LIGHT

SECOND REFERENCE LIGHT 427

SECOND PATH 406

SECOND INTERFERED LIGHT 428
SECOND BEAT FREQUENCY 430

COMPONENTS 471
SECOND LASER UNIT 470
SECOND DETECTOR 472 474
SECOND INTERFERENCE COUPLER

SPEED ANALYZER 408

THRESHOLD 452

SPEED 440

EP 4 372 418 A1

502

500

504

506

FIG. 5

FIG. 6

700

FIG. 7

704

706

$U_{RAW}$

708

TIME

702

EP 4 372 418 A1

800

FIG. 8

804

POWER

808

THRESHOLD  810

806

FREQUENCY

802

900

FIG. 9

904

POWER

THRESHOLD  910

908

906

FREQUENCY

902

1000

# FIG. 10

1004

POWER

1009

THRESHOLD

1010

1008

1007

1006

FREQUENCY

1002

EP 4 372 418 A1

(Figure 11 — system 1100)

- 1130, 1132
- 1112 TELESCOPE
- 1110
- 1108 WDM
- 1100
- FIRST LASER UNIT 1121
- 1105 FIRST FIBER AMPLIFIER
- 1106
- 1103 FIRST MODULATOR
- 1104
- SECOND MODULATOR
- SECOND FIBER AMPLIFIER 1122
- SECOND LASER UNIT
- 1113, 1114
- 1101 FIRST OSCILLATOR
- 1102 SECOND OSCILLATOR
- 1136
- 1118 WDM
- 1148
- 1133, 1134, 1138
- 1150
- 1146
- 1145
- 1140 FIRST DETECTOR
- 1152 SECOND DETECTOR
- 1144 SIGNAL ANALYZER

Legend:
- — — — FREE-SPACE
- ——— OPTICAL FIBER
- ——— ELECTRICAL WIRE

FIG. 11

33

START

1200 — RECEIVE A FIRST BACKSCATTER LIGHT GENERATED IN RESPONSE TO EMITTING A FIRST LASER BEAM INTO AN ATMOSPHERE FROM THE AIRCRAFT

1202 — MEASURE A FIRST BEAT FREQUENCY FOR A FIRST INTERFERED LIGHT GENERATED BY INTERFERING THE FIRST BACKSCATTER LIGHT AND A FIRST REFERENCE LIGHT DERIVED FROM THE FIRST LASER BEAM

1204 — RECEIVE A SECOND BACKSCATTER LIGHT GENERATED IN RESPONSE TO EMITTING A SECOND LASER BEAM INTO THE ATMOSPHERE FROM THE AIRCRAFT

1206 — MEASURE A SECOND BEAT FREQUENCY FOR A SECOND INTERFERED LIGHT GENERATED BY INTERFERING THE SECOND BACKSCATTER LIGHT WITH A SECOND REFERENCE LIGHT DERIVED FROM THE SECOND LASER BEAM

1208 — DETERMINE THE SPEED OF THE AIRCRAFT USING THE FIRST BEAT FREQUENCY IN RESPONSE A FIRST POWER OF THE FIRST BACKSCATTER LIGHT BEING GREATER THAN A THRESHOLD

1210 — DETERMINE THE SPEED OF THE AIRCRAFT USING THE SECOND BEAT FREQUENCY IN RESPONSE TO THE FIRST POWER OF THE FIRST BACKSCATTER LIGHT NOT BEING GREATER THAN THE THRESHOLD

END

FIG. 12

START

INDICATE AN ERROR CONDITION IN RESPONSE TO A SECOND POWER OF THE SECOND BACKSCATTER LIGHT NOT BEING GREATER THAN THE THRESHOLD

1300

END

FIG. 13

START

INTERFERE THE FIRST BACKSCATTER LIGHT WITH THE FIRST REFERENCE LIGHT TO GENERATE THE FIRST INTERFERED LIGHT HAVING THE FIRST BEAT FREQUENCY

1400

INTERFERE THE SECOND BACKSCATTER LIGHT WITH THE SECOND REFERENCE LIGHT TO GENERATE THE SECOND INTERFERED LIGHT HAVING THE SECOND BEAT FREQUENCY

1402

END

FIG. 14

START

1500 — MEASURE THE FIRST POWER OF
THE FIRST BACKSCATTER LIGHT

END

FIG. 15

START

MEASURE THE FIRST POWER OF THE FIRST
BACKSCATTER LIGHT INDIRECTLY USING THE
FIRST INTERFERED LIGHT GENERATED BY
INTERFERING THE FIRST BACKSCATTER LIGHT
WITH THE FIRST REFERENCE LIGHT

1600

END

FIG. 16

START

MEASURE THE FIRST POWER OF THE FIRST
BACKSCATTER LIGHT DIRECTLY USING THE
FIRST BACKSCATTER LIGHT PRIOR TO
INTERFERING THE FIRST BACKSCATTER
LIGHT WITH THE FIRST REFERENCE LIGHT

1700

END

FIG. 17

START

1800 — EMIT A FIRST LASER BEAM HAVING A FIRST WAVELENGTH INTO AN ATMOSPHERE FROM AN AIRCRAFT

1802 — EMIT A SECOND LASER BEAM HAVING A SECOND WAVELENGTH INTO THE ATMOSPHERE FROM THE AIRCRAFT

1804 — RECEIVE A FIRST BACKSCATTER LIGHT GENERATED IN RESPONSE TO EMITTING THE FIRST LASER BEAM INTO THE ATMOSPHERE FROM THE AIRCRAFT

1806 — MEASURE A FIRST BEAT FREQUENCY FOR A FIRST INTERFERED LIGHT GENERATED FROM INTERFERING THE FIRST BACKSCATTER LIGHT WITH A FIRST REFERENCE LIGHT DERIVED FROM THE FIRST LASER BEAM

1808 — RECEIVE A SECOND BACKSCATTER LIGHT GENERATED IN RESPONSE TO EMITTING THE SECOND LASER BEAM INTO THE ATMOSPHERE FROM THE AIRCRAFT

1810 — MEASURE A SECOND BEAT FREQUENCY FOR A SECOND INTERFERED LIGHT GENERATED FROM INTERFERING THE SECOND BACKSCATTER LIGHT WITH A SECOND REFERENCE LIGHT DERIVED FROM THE SECOND LASER BEAM

1812 — DETERMINE THE SPEED OF THE AIRCRAFT USING THE FIRST BEAT FREQUENCY AND THE SECOND BEAT FREQUENCY

END

FIG. 18

START

DETERMINE THE SPEED OF THE AIRCRAFT
USING THE FIRST BEAT FREQUENCY IN
1900 ~ RESPONSE TO THE FIRST BACKSCATTER
LIGHT HAVING A FIRST POWER THAT IS
GREATER THAN A THRESHOLD

END

FIG. 19

START

DETERMINE THE SPEED OF THE AIRCRAFT
USING THE SECOND BEAT FREQUENCY IN
RESPONSE TO THE FIRST BACKSCATTER — 2000
LIGHT HAVING A FIRST POWER THAT IS NOT
GREATER THAN A THRESHOLD

END

FIG. 20

START

2100 — DETERMINE A FIRST SPEED USING THE FIRST BEAT FREQUENCY

2102 — DETERMINE A SECOND SPEED USING THE SECOND BEAT FREQUENCY

2104 — DETERMINE THE SPEED OF THE AIRCRAFT AS AN AVERAGE OF THE FIRST SPEED AND THE SECOND

END

FIG. 21

START

2200 — EMIT A LASER BEAM HAVING A WAVELENGTH INTO AN ATMOSPHERE

2202 — RECEIVE A BACKSCATTER LIGHT GENERATED IN RESPONSE TO EMITTING THE LASER BEAM INTO THE ATMOSPHERE

2204 — MEASURE A BEAT FREQUENCY FOR AN INTERFERED LIGHT GENERATED FROM INTERFERING THE BACKSCATTER LIGHT WITH A REFERENCE LIGHT DERIVED FROM THE LASER BEAM

2206 — DETERMINE A SET OF CHARACTERISTICS FOR THE AEROSOLS BASED ON A POWER OF THE BEAT FREQUENCY

END

FIG. 22

START

2300 — COMPARE A PEAK POWER
FOR THE BEAT FREQUENCY
WITH A SET OF THRESHOLDS

END

FIG. 23

START

EMIT A LASER BEAM HAVING A SECOND
WAVELENGTH INTO AN ATMOSPHERE — 2400

RECEIVE A SECOND BACKSCATTER LIGHT
GENERATED IN RESPONSE TO EMITTING
THE SECOND LASER BEAM INTO THE
ATMOSPHERE FROM THE AIRCRAFT — 2402

MEASURE A SECOND BEAT FREQUENCY
FOR A SECOND INTERFERED LIGHT
GENERATED FROM INTERFERING THE
SECOND BACKSCATTER LIGHT WITH A
SECOND REFERENCE LIGHT DERIVED
FROM THE SECOND LASER BEAM — 2404

DETERMINE AN AVERAGE SIZE
OF THE AEROSOLS USING THE
FIRST BEAT FREQUENCY AND
THE SECOND BEAT FREQUENCY — 2406

END

FIG. 24

2500

2502 — SPECIFICATION AND DESIGN

2504 — MATERIAL PROCUREMENT

2506 — COMPONENT AND SUBASSEMBLY MANUFACTURING

2508 — SYSTEM INTEGRATION

2510 — CERTIFICATION AND DELIVERY

2512 — IN SERVICE

2514 — MAINTENANCE AND SERVICE

## FIG. 25

2600

AIRCRAFT

2602 — AIRFRAME    INTERIOR — 2606

SYSTEMS

PROPULSION SYSTEM

ELECTRICAL SYSTEM

2608    2612

2610    2614

HYDRAULIC SYSTEM

ENVIRONMENTAL SYSTEM

2604

## FIG. 26

**EUROPEAN SEARCH REPORT**

Application Number

EP 23 19 8888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/181864 A1 (SCHMITT NIKOLAUS [DE] ET AL) 28 July 2011 (2011-07-28) * abstract; figures 1, 4, 8 * * paragraphs [0033], [0055], [0056], [0065], [0075] * | 1-15 | INV. G01S17/58 G01S17/95 |
| A | US 2008/219300 A1 (KRUPKIN VLADIMIR [IL] ET AL) 11 September 2008 (2008-09-11) * abstract; figures 1-3 * * paragraphs [0030] – [0039] * | 1-15 | |
| A | US 2020/116556 A1 (CEDILNIK GREGOR [DE]) 16 April 2020 (2020-04-16) * abstract; figures 1-7 * * paragraphs [0011], [0012], [0065] * | 1-15 | |

TECHNICAL FIELDS
SEARCHED        (IPC)

G01S

The present search report has been drawn up for all claims

| Place of search | Date of completion of the search | Examiner |
|---|---|---|
| Munich | 6 February 2024 | Cordeiro, J |

EPO FORM 1503 03.82 (P04C01)

## ANNEX TO THE EUROPEAN SEARCH REPORT
## ON EUROPEAN PATENT APPLICATION NO.

EP 23 19 8888

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2024

| Patent document cited in search report | | Publication date | Patent family member(s) | | Publication date |
|---|---|---|---|---|---|
| US 2011181864 | A1 | 28-07-2011 | DE 102008031681 | A1 | 14-01-2010 |
| | | | EP 2297594 | A1 | 23-03-2011 |
| | | | US 2011181864 | A1 | 28-07-2011 |
| | | | WO 2010000751 | A1 | 07-01-2010 |
| US 2008219300 | A1 | 11-09-2008 | EP 1941591 | A2 | 09-07-2008 |
| | | | US 2008219300 | A1 | 11-09-2008 |
| | | | WO 2007036933 | A2 | 05-04-2007 |
| US 2020116556 | A1 | 16-04-2020 | EP 3640618 | A1 | 22-04-2020 |
| | | | GB 2578116 | A | 22-04-2020 |
| | | | US 2020116556 | A1 | 16-04-2020 |

EPO FORM P0459

For more details about this annex : see Official Journal of the European Patent Office, No. 12/82